# EUROPÄISCHE PATENTSCHRIFT

(11) **EP 3 593 055 B1**
(45) Veröffentlichungstag und Bekanntmachung des Hinweises auf die Patenterteilung: **12.05.2021**
(21) Anmeldenummer: 18711863.3
(22) Anmeldetag: 08.03.2018
(51) Int. Cl.: F24D 19/10, G05D 23/19

(54) **VERFAHREN ZUM BETREIBEN EINER HEIZUNGSANLAGE**
METHOD FOR OPERATING A HEATING INSTALLATION
PROCÉDÉ POUR FAIRE FONCTIONNER UNE INSTALLATION DE CHAUFFAGE

(30) Priorität: 08.03.2017 DE 102017203850
(43) Veröffentlichungstag der Anmeldung: 15.01.2020
(73) Patentinhaber: Viessmann Climate Solutions SE, 35108 Allendorf (Eder) (DE)
(72) Erfinder: FAßNACHT, Tillmann, 72663 Großbettlingen (DE); STRUBEL, Jan, 64319 Pfungstadt (DE); WEINERT, Thorsten, 35099 Burgwald/Ernsthausen (DE)
(74) Vertreter: MERH-IP Matias Erny Reichl Hoffmann Patentanwälte PartG mbB
(86) Internationale Anmeldenummer: PCT/EP2018/055833
(87) Internationale Veröffentlichungsnummer: WO 2018/162679

(56) Entgegenhaltungen:
- DE-A1-102012 002 941
- DE-A1-102014 202 738
- DE-U1-202012 012 915

## Beschreibung

Die vorliegende Erfindung betrifft ein Verfahren zum Betreiben einer Heizungsanlage in einem Gebäude sowie eine Heizungsanlage. Insbesondere soll ein Verfahren zum Betreiben einer Heizungsanlage angegeben werden, mit dem sich ein dynamischer hydraulischer Abgleich realisieren lässt, so dass alle Räume gleichmäßig erwärmt werden können.

Ein gattungsgemäßes Verfahren zum hydraulischen Abgleich für eine Heizungsanlage wird beispielsweise in der deutschen Patentschrift DE 10 2012 018 778 B4 offenbart. In einer Anlernphase werden obere Grenzwerte für Ventilhübe von Heizkörpern ermittelt und gespeichert. In einer darauffolgenden Aufheizphase werden die Ventilhübe jeweils auf die ermittelten Grenzwerte begrenzt. Darauf folgend werden in einer Regelphase die Begrenzung der Ventilhübe aufgehoben und die Leistung einer zentralen Pumpe angepasst.

Ein weiteres gattungsgemäßes Verfahren zum dynamischen hydraulischen Abgleich wird in der deutschen Patentschrift DE 10 2012 002 941 B4 beschrieben. Bei diesem Verfahren wird die Rohrnetzstruktur der Heizungsanlage zusammen mit den dazugehörigen hydraulischen Widerständen in einer Matrix in einer zentralen Regeleinheit abgelegt. In Abhängigkeit der aktuellen Ventilhübe und vorher berechneter Grenzwerte für die Ventilhübe werden Sollvolumenströme in der Matrix iterativ vergrößert oder verkleinert.

Ein weiteres gattungsgemäßes Verfahren zum hydraulischen Abgleich wird im Dokument DE 10 2014 202 738 A1 beschrieben.

Ein hydraulischer Abgleich ist ein Verfahren, mit dem man zum Beispiel bestimmte Volumenströme eines Wärmeträgermediums durch Heizkörper einer Heizungsanlage in einem Gebäude einstellen kann. Ziel ist es alle Heizkörper der Heizungsanlage bei einer bestimmten Vorlauftemperatur des Wärmeträgermediums mit dem Volumenstrom zu versorgen, bei dem eine abgegebene Heizleistung der Heizkörper so groß ist, dass sich in den zugehörigen Räumen jeweils eine gewünschte vorgegebene Raumsolltemperatur einstellt. Dasselbe gilt in entsprechender Weise für eine Klimaanlage zum Kühlen von Räumen des Gebäudes.

Der hydraulische Abgleich einer Heizungs-, Lüftungs-, Klima- und/oder Kältetechnikanlage (HLKK-Anlage) kann ferner bewirken, dass sich eine bestimmte Temperaturspreizung (Temperaturdifferenz) zwischen Vorlauf- und Rücklauftemperatur an den jeweiligen Verbrauchern (zum Beispiel Heizkörper, Fußbodenheizung oder Kühlkörper) ergibt. Die weitergefassten Ziele des hydraulischen Abgleiches können neben der Grundanforderung eine bestimmte abgegebene Leistung zum Heizen (oder Kühlen) in den Räumen in einem spezifischen Arbeitspunkt der Anlage sicherzustellen beispielsweise folgende Punkte umfassen: ein gleichmäßiges Aufheizen (oder Abkühlen) zu realisieren, die Energie aus dem Wasserdampf des Verbrennungsabgases (Brennwert) des Wärmeerzeugers effizient, durch die Sicherstellung niedriger Rücklauftemperaturen, zu nutzen und Geräuschentwicklungen sowohl an Stelleinrichtungen (zum Beispiel Ventile) als auch in Rohrleitungen durch zu hohe Druckabfälle oder Fließgeschwindigkeiten des Wärmeträgermediums zu vermeiden.

Demnach ist das Ziel eines hydraulischen Abgleichs insbesondere, die zum Heizen (oder Kühlen) der Räume erforderliche Leistung zu erreichen, ein gleichmäßiges und schnelles Aufheizen (oder Abkühlen) der Räume zu gewährleisten, eine überhöhte Rücklauftemperatur zu vermeiden, den Brennwert der Heizungsanlage möglichst effizient zu nutzen und eine unerwünschte Geräuschentwicklung durch das strömende Wärmeträgermedium in den Leitungen zu vermeiden. Ein weiteres Ziel kann darin liegen, den Energieverbrauch der HLKK-Anlage insgesamt zu senken.

Der hydraulische Abgleich soll insbesondere dafür sorgen, dass an jedem Heizkörper der benötigte Volumenstrom bzw. die gewünschte Leistungsabgabe bereitgestellt wird, wobei der Energieverbrauch der Heizungsanlage so gering wie möglich ausfallen soll. Dies kann insbesondere dann erreicht werden, wenn die Heizungsanlage mit einer möglichst niedrigen Vorlauftemperatur und einer möglichst geringen Pumpenleistung betrieben wird.

Bei einer nicht hydraulisch abgeglichenen Heizungsanlage kann ein Heizkörper, der sich besonders nahe an der Pumpe befindet überversorgt und ein pumpenferner Heizkörper unterversorgt sein. Beim Aufheizen würde dies dazu führen, dass die Räume unterschiedlich schnell warm werden. Außerdem kann insbesondere der überversorgte Heizkörper zu einem unnötig hohen Energieverbrauch beitragen, da er eine höhere Heizleistung abgeben kann als zum Heizen des Raumes auf die gewünschte Solltemperatur benötigt wird.

Gemäß dem Stand der Technik kann ein konventioneller statischer hydraulischer Abgleich in Abhängigkeit einer berechneten Heizlast, der installierten Heizflächen, des installierten Rohrnetzes und der Vorlauftemperatur durchgeführt werden. Die Vorlauftemperatur wird dabei meist in Abhängigkeit der benötigten Heizkörperübertemperatur des ungünstigsten Raumes bestimmt. Ferner kann die Rücklauftemperatur über die benötige Heizkörperübertemperatur zur Deckung der Heizlast für jeden Heizkörper bestimmt und daraus dann der am Heizkörper benötigte Volumenstrom ermittelt werden. Am hydraulisch ungünstigsten Heizkörper (d. h. am Heizkörper mit dem höchsten hydraulischen Strangwiderstand) wird idealerweise ein Ventil eingesetzt, das nicht weiter gedrosselt werden muss. An allen anderen Heizkörpern kann als Voreinstellung ein zusätzlicher hydraulischer Widerstand eingebracht werden, und zwar in der Höhe, dass bei dem benötigten Volumenstrom in dem jeweiligen Kreis der gleiche Druckabfall resultiert wie im Kreis des hydraulisch ungünstigsten Heizkörpers. Die Dimensionierung und Einstellung der Heizkreispumpe ergibt sich aus dem Gesamtvolumenstrom bei Auslegung und dem Druckabfall im hydraulisch ungünstigsten Kreis.

Beim konventionellen statischen hydraulischen Abgleich kann die innere Ventilautorität einiger Ventile durch deren Voreinstellung stark abgesenkt werden. Das heißt, dass die betroffenen Ventile einen deutlich geringeren Einfluss auf den resultierenden Durchfluss haben können. Hierdurch kann die Betriebskennlinie des Heizkörpers stark deformiert werden. Aufgrund einer möglichen resultierenden starken Nichtlinearität der Regelstrecke sinkt die Regelbarkeit des betroffenen Heizkörpers deutlich ab. Bei einer Voreinstellung eines Ventils auf einen relativ kleinen Volumenstrom ist praktisch keine stetige Regelung des Ventils mehr möglich. Auch bei einem kompletten Öffnen des Ventils kann der Volumenstrom nur noch einen durch die Voreinstellung begrenzten Maximalbetrag erreichen.

Durch die Voreinstellung der Ventile kann zudem das Leistungspotential der jeweiligen Heizkörper dauerhaft begrenzt werden. Teilweise könnte dieses Leistungspotential jedoch sinnvoll genutzt werden: Wird beispielsweise die Temperatur eines Raumes für einen bestimmten Zeitpunkt abgesenkt, und soll der Raum dann später wieder aufgeheizt werden, wäre es zweckmäßig das volle Leistungspotential des Heizkörpers für das Aufheizen zu nutzen. Bei einem statischen hydraulischen Abgleich ist das Leistungspotential dieses Heizkörpers durch die Voreinstellung jedoch dauerhaft reduziert. Die Aufheizzeiten können dadurch stark verlängert werden. Längere Aufheizzeiten können aber einen Komfortverlust für die Benutzer oder Bewohner des Gebäudes bedeuten und einen höheren Energieverbrauch bewirken, da der Raum früher aus dem Absenkbetrieb genommen werden muss.

Die oben beschriebene Voreinstellung eines Heizkörperventils wird meist durch eine extreme Verengung des Eintrittsquerschnitts des Ventils erreicht. Insbesondere bei älteren Heizungsanlagen können jedoch Schmutzpartikel, zum Beispiel von der Montage, sowie Ablagerungen im Rohrnetz vorhanden sein. Bei einem voreingestellten Ventil ist deshalb das Risiko von Schmutzablagerungen und Verstopfungen größer als bei einem nicht voreingestellten Ventil.

Aufgabe der vorliegenden Erfindung ist es, die oben beschriebenen möglichen Probleme des herkömmlichen statischen hydraulischen Abgleichs zu vermeiden. Diese Aufgabe wird gelöst durch ein Verfahren zum Betreiben einer Heizungsanlage in einem Gebäude mit mindestens zwei beheizten Räumen gemäß Anspruch 1. Obwohl das Verfahren im Folgenden anhand einer Heizungsanlage zum Heizen von Räumen eines Gebäudes beschrieben wird, kann das Verfahren allgemein auch auf eine HLKK-Anlage, zum Beispiel eine Klimaanlage zum Kühlen von Räumen, angewendet werden.

Erfindungsgemäß umfasst eine Heizungsanlage mindestens einen Heizkörper pro beheiztem Raum, also mindestens zwei Heizkörper, die in separaten Räumen angeordnet sind. Das Gebäude kann neben den mindestens zwei beheizten Räumen auch unbeheizte Räume umfassen. In einem beheizten Raum können auch mehr als ein Heizkörper angeordnet sein. Die Heizungsanlage umfasst mindestens einen Wärmeerzeuger zum Erhitzen eines fluiden Trägermediums. Bei dem Wärmeerzeuger kann es sich um einen üblichen Heizkessel handeln, der mit einem Brennstoff wie zum Beispiel Gas, Öl, Kohle oder Holz betrieben wird. Wird das Verfahren auf eine Klimaanlage zum Kühlen angewendet, ist der Wärmeerzeuger entsprechend durch einen Kälteerzeuger zu ersetzen.

Das fluide Trägermedium kann zum Beispiel eine Flüssigkeit wie Wasser oder ein Gas oder Gasgemisch wie zum Beispiel Luft sein. Das Trägermedium fließt vom Wärmeerzeuger über einen Vorlauf zu den Heizkörpern und von den Heizkörpern über einen Rücklauf zurück zum Wärmeerzeuger. Zum Fördern des Trägermediums ist im Vorlauf oder im Rücklauf mindestens eine Pumpe angeordnet. Die Pumpe kann auch im Wärmeerzeuger angeordnet sein. Ferner können auch mehrere Pumpen, zum Beispiel eine Pumpe pro Heizkreis, vorgesehen sein.

Ein Heizkörper ist dazu ausgelegt, die vom Trägermedium transportierte Wärme an den Raum abzugeben. Die von einem Heizkörper abgegebene Heizleistung hängt im Allgemeinen von dessen Oberfläche, von der Temperatur des Trägermediums und vom Volumenstrom des Trägermediums durch den Heizkörper ab. Ein Heizkörper kann beispielsweise ein Wandheizkörper, wie zum Beispiel ein Radiator, ein Konvektor, ein Gliederheizkörper oder ein Flachheizkörper, sein. Ein Heizkörper kann aber auch ein Element einer Fußbodenheizung und/oder Wandheizung sein.

Jeder Heizkörper umfasst ein Stellglied zum Einstellen eines Volumenstroms durch den Heizkörper. Ein solches Stellglied kann zum Beispiel als Ventil ausgeführt sein, über dessen Ventilhub der Volumenstrom (oder Massenstrom) durch den Heizkörper eingestellt werden kann. Das Stellglied kann insbesondere einen elektrisch steuerbaren Aktor umfassen. Der Aktor kann beispielsweise ein Elektromotor sein.

Die Heizungsanlage umfasst ferner eine Einstelleinrichtung, wobei pro Raum mindestens eine Einstelleinrichtung vorgesehen ist, die dem einen oder mehreren Heizkörpern des Raumes zugeordnet ist, und zum Einstellen deren Stellglieder konfiguriert ist. Über die Einstelleinrichtung kann eine Raumsolltemperatur für den Raum vorgegeben werden. Dazu kann die Einstelleinrichtung eine geeignete Benutzerschnittstelle beziehungsweise ein geeignetes Bedienelement aufweisen. Ferner kann auch die zentrale Regeleinrichtung eine geeignete Benutzerschnittstelle aufweisen, über die Raumsolltemperaturen vorgegeben werden können. Die zentrale Regeleinrichtung und/oder die Einstelleinrichtungen können alternativ oder zusätzlich auch über eine Smartphone-App steuerbar sein. Über einen externen im Raum angeordneten oder einen intern in der Einstelleinrichtung angeordneten Temperatursensor kann eine aktuelle Raumisttemperatur ermittelt werden.

Die Einstelleinrichtung umfasst einen Regler zum Einstellen einer Stellgliedöffnung des Stellglieds beziehungsweise der Stellglieder der in dem Raum angeordneten Heizkörper. Bei dem Regler kann es sich um eine geeignete Regelelektronik handeln, die geeignete Regelsignale an das Stellglied ausgibt. Beispielsweise kann der Regler als Mikrocontroller mit PI-Regler oder PID-Regler ausgeführt sein. Der Regler ist konfiguriert, die Stellgliedöffnung des Stellglieds in Abhängigkeit einer jeweils vorgegebenen Raumsolltemperatur und der ermittelten Raumisttemperatur einzustellen, so dass der Regler die Raumisttemperatur auf die Raumsolltemperatur regelt. Die eingestellte Stellgliedöffnung bestimmt den Volumenstrom durch den jeweiligen Heizkörper. Je weiter ein Stellglied geöffnet ist, desto größer ist der Volumenstrom. Ein Stellglied kann auch konfiguriert sein, ausschließlich die Zustände voll geschlossen oder voll geöffnet anzunehmen. Die Stellgliedöffnung kann dann beispielsweise (als zeitliches Mittel) einer zeitlichen Variation des geöffneten und geschlossenen Zustands beeinflusst werden.

Jede Einstelleinrichtung weist ferner eine Kommunikationseinrichtung zum Kommunizieren mit einer zentralen Regeleinrichtung auf. Die Kommunikation kann drahtgebunden oder drahtlos erfolgen. Die zentrale Regeleinrichtung ist konfiguriert, den Wärmeerzeuger und die Pumpe zu regeln. Zum Regeln des Wärmeerzeugers und der Pumpe kann die zentrale Regeleinrichtung auch mehrere voneinander getrennte Regelvorrichtungen aufweisen. Ferner kann die zentrale Regeleinrichtung Einstellungen an den Einstelleinrichtungen vornehmen. Beispielsweise kann die zentrale Regeleinrichtung Grenzwertvorgaben an die Einstelleinrichtung übertragen. Die Grenzwerte können von der zentralen Regeleinrichtung in Abhängigkeit von Parametern ermittelt werden, die von den Einstelleinrichtungen an die zentrale Regeleinrichtung übertragen werden. Im Folgenden wird ein solches Verfahren beschrieben. Die Einstellvorrichtungen der einzelnen Räume können vorzugsweise untereinander vernetzt sein, um Daten auszutauschen oder an die zentrale Regeleinrichtung weiterzuleiten. Die zentrale Regeleinrichtung kann insbesondere auch ein Bestandteil des Wärmeerzeugers sein, beziehungsweise einzelne Funktionen, wie zum Beispiel die Steuerung oder Regelung der Pumpe können in einer Regelung oder Steuerung des Wärmeerzeugers implementiert sein.

In einem ersten Schritt des Verfahrens wird für jeden Raum ermittelt, ob eine aktuelle Raumisttemperatur kleiner als eine vorgegebene Raumsolltemperatur ist, und die Differenz zwischen Raumisttemperatur und vorgegebener Raumsolltemperatur größer als eine vorgegebene Temperaturdifferenz ist. Dieser Schritt kann beispielsweise durch die zentrale Regeleinrichtung oder jeweils durch eine Einstelleinrichtung durchgeführt werden. Die vorgegebene Temperaturdifferenz kann beispielsweise von der zentralen Regeleinrichtung vorgegeben werden. Insbesondere wird bestimmt, ob die Raumisttemperatur die Raumsolltemperatur um einen Betrag unterschreitet, der größer als die vorgegebene Temperaturdifferenz ist. Unterschreitet die Raumisttemperatur die Raumsolltemperatur um einen Betrag, der größer als die vorgegebene Temperaturdifferenz ist, so werden die Heizkörper des betroffenen Raumes im Aufheizbetrieb betrieben. Um eine effiziente Einzelraumregelung der Temperatur pro Raum vorzunehmen wird dieser Verfahrensschritt vorzugsweise lokal durch die jeweiligen Einstelleinrichtungen durchgeführt. Die Einstelleinrichtungen können aber konfiguriert sein, der zentralen Regeleinrichtung mitzuteilen, ob sich die Heizkörper des Raumes im Aufheizbetrieb befinden.

In einem weiteren Verfahrensschritt, der vorzugsweise durch die zentrale Regeleinrichtung ausgeführt wird, wird geprüft, ob Heizkörper in mehr als einem Raum im Aufheizbetrieb betrieben werden. Wenn dies der Fall ist, so wird für jeden Raum mit Heizkörpern im Aufheizbetrieb ein Aufheizwert des Raumes in Abhängigkeit einer Raumtemperaturänderung innerhalb eines festgelegten Zeitraums ermittelt. Es wird also ein Wert der Temperaturänderung pro Zeit für alle Räume mit Heizkörpern im Aufheizbetrieb ermittelt. Alternativ kann jede Einstelleinrichtung dazu ausgelegt sein, im Aufheizbetrieb den jeweiligen Aufheizwert zu bestimmen, und diesen an die zentrale Regeleinrichtung zu übertragen.

Für jeden Heizkörper im Aufheizbetrieb wird ein oberer Grenzwert der Stellgliedöffnung in Abhängigkeit des jeweils ermittelten Aufheizwerts und eines Mittelwerts aller ermittelten Aufheizwerte vorgegeben. Dieser Schritt kann vorzugsweise von der zentralen Regeleinrichtung durchgeführt werden. Insbesondere vergleicht die zentrale Regeleinrichtung den jeweiligen Aufheizwert jedes Raumes mit einem Mittelwert der Aufheizwerte aller Räume. Ziel eines hydraulischen Abgleiches ist es insbesondere, dass alle Räume gleich schnell Aufheizen, also dass alle Räume einen gleich großen Aufheizwert haben. Eine Abweichung des Aufheizwerts vom Mittelwert kann in vorteilhafter Weise durch ein Anpassen der Stellgliedöffnung ausgeglichen werden, so dass durch dieses Verfahren ein dynamischer hydraulischer Abgleich durchgeführt werden kann.

Die Heizkörper werden in Abhängigkeit der vorgegebenen oberen Grenzwerte betrieben. Dazu kann die zentrale Regeleinrichtung die ermittelten oberen Grenzwerte an die jeweiligen Einstelleinrichtungen übertragen. Die Einstellung der Stellglieder wird weiterhin vorzugsweise unabhängig durch die jeweiligen Einstelleinrichtungen geregelt. Möglich ist aber auch eine Bestimmung der Sollwerte für die Stellglieder der jeweiligen Einstelleinrichtungen in der zentralen Regeleinheit und Übertragung dieser Werte an die Einstelleinrichtungen. Durch das beschriebene Verfahren wird nur ein (neuer) oberer Grenzwert der Stellgliedöffnung ermittelt. Um im Aufheizbetrieb eine vorgegebene Raumsolltemperatur möglichst schnell zu erreichen, wird die Einstelleinrichtung das Stellglied in der Regel so weit wie möglich öffnen. Die oberen Grenzwerte begrenzen somit die maximal durch eine Einstelleinrichtung einstellbare Stellgliedöffnung. Ein hydraulisch ungünstiger Heizkörper wird bei einer großen Abweichung des Aufheizwerts vom Mittelwert einen möglichst hohen oberen Grenzwert erhalten. Günstig gelegene Räume, die zum Beispiel nahe bei der Pumpe liegen, werden einen niedrigeren oberen Grenzwert erhalten. Somit kann durch das Verfahren ein ähnlicher Effekt, wie durch den konventionellen statischen hydraulischen Abgleich erreicht werden, wobei die Einstellungen jedoch nicht statisch sondern in Abhängigkeit des jeweiligen Betriebszustands dynamisch vorgenommen werden. Wenn beispielsweise Heizkörper in nur einem Raum im Aufheizbetrieb sind, so können diese Heizköper mit der maximal möglichen Stellgliedöffnung betrieben werden, ohne dass dabei der zusätzliche den Volumenstrom begrenzende hydraulische Widerstand einer statischen Voreinstellung wirkt.

Das Verfahren kann einen weiteren Schritt umfassen, bei dem zunächst alle (aktuell) vorgegebenen oberen Grenzwerte der Stellgliedöffnungen erfasst werden. Für die Heizköper mit dem (aktuell) größten vorgegebenen oberen Grenzwert der Stellgliedöffnung kann ein neuer oberer Grenzwert der Stellgliedöffnung vorgeben werden. Der neue obere Grenzwert kann beispielsweise in Abhängigkeit eines von der zentralen Regeleinrichtung vorgegebenen Sollwerts für den oberen Grenzwert vorgegeben werden. Allen übrigen Heizköpern können dann neue obere Grenzwerte der Stellgliedöffnung in Abhängigkeit einer Differenz zwischen dem größten vorgegebenen oberen Grenzwert und dem neuen oberen Grenzwert vorgegeben werden.

Ziel dieses zusätzlichen Verfahrensschritts ist es, alle Heizkörper bei einem größtmöglichen Volumenstrom zu betreiben. Beispielsweise befinden sich zwei Heizköper in getrennten Räumen im Aufheizbetrieb. Die Öffnung des Stellglieds des einen Heizkörpers ist auf einen oberen Grenzwert von 50% beschränkt, die Öffnung des anderen auf 30%. Nun kann die zentrale Regeleinrichtung vorgeben, dass der maximale obere Grenzwert 80% betragen soll. Dann können die oberen Grenzwerte der Öffnung der Stellglieder beispielsweise um jeweils 30% angehoben werden.

Ein bevorzugtes Verfahren kann ferner einen Schritt umfassen, bei dem die aktuell eingestellten Stellgliedöffnungen aller Heizkörper erfasst werden. In Anhängigkeit einer Differenz zwischen der maximalen aktuell eingestellten Stellgliedöffnung und einem vorgegebenen Sollwert für die maximale Stellgliedöffnung kann eine Vorlaufsolltemperatur ermittelt werden. Im Folgenden kann der Wärmeerzeuger in Abhängigkeit der ermittelten Vorlaufsolltemperatur betrieben werden. Hierdurch kann erreicht werden, dass die Vorlauftemperatur, mit welcher der Wärmeerzeuger betrieben werden soll, in Abhängigkeit der eingestellten Stellgliedöffnungen angepasst wird.

Das Einstellen der Stellgliedöffnungen wird lokal in jedem Raum durch die jeweilige Einstelleinrichtung vorgenommen, und zwar in Abhängigkeit der Abweichung der Raumisttemperatur von der Raumsolltemperatur. Die Vorlaufsolltemperatur wird durch die zentrale Regeleinrichtung vorgegeben. Die von den Einstelleinrichtungen eingestellte Stellgliedöffnung ist im Allgemeinen abhängig von der Vorlauftemperatur, da die Heizleistung von der Vorlauftemperatur abhängt.

Das Verfahren kann insbesondere umfassen, dass die Vorlaufsolltemperatur abgesenkt wird, falls die maximale aktuell eingestellte Stellgliedöffnung kleiner als der vorgegebene Sollwert für die maximale Stellgliedöffnung ist. Ferner kann die Vorlaufsolltemperatur erhöht werden, falls die maximale aktuell eingestellte Stellgliedöffnung größer als der vorgegebene Sollwert für die maximale Stellgliedöffnung ist.

Insbesondere kann das Verfahren also derart ablaufen, dass die zentrale Regeleinrichtung prüft, ob die maximale aktuell eingestellte Stellgliedöffnung größer oder kleiner als ein vorgegebener Sollwert für die maximale Stellgliedöffnung ist. Wird eine relativ hohe Vorlauftemperatur bereitgestellt, so kann dies dazu führen, dass die Einstelleinrichtungen in den einzelnen Räumen die Stellglieder der Heizköper mit relativ kleinen Öffnungen betreibt, da ein relativ kleiner Volumenstrom zu einer ausreichenden Heizleistung zum Aufheizen des Raumes führen kann. Ein Ziel des Verfahrens ist es, die Heizungsanlage mit einer möglichst niedrigen Vorlauftemperatur zu betreiben. Stellt die zentrale Regeleinrichtung also fest, dass die maximale aktuell eingestellte Stellgliedöffnung kleiner als ein vorgegebener Sollwert ist, so kann die Vorlauftemperatur abgesenkt werden. Dies wird dazu führen, dass die Einstelleinrichtungen in den einzelnen Räumen die Stellglieder weiter öffnen, um eine bestimmte Heizleistung aufrechtzuerhalten. Beispielsweise kann ein Sollwert der maximalen Stellgliedöffnung 90% betragen. Die zentrale Regeleinrichtung kann die Vorlauftemperatur so lange, zum Beispiel schrittweise um eine festgelegte Temperaturänderung, absenken, bis der maximal aktuell einstellte Wert der Stellgliedöffnungen 90% beträgt. Entsprechend kann eine Erhöhung der Vorlauftemperatur bei einer Überschreitung des Sollwerts vorgenommen werden. Somit kann die zentrale Regeleinrichtung konfiguriert sein, die Vorlauftemperatur auf die maximale Stellgliedöffnung zu regeln. Hierdurch kann zum einen die Vorlauftemperatur auf einen möglichst kleinen Wert eingestellt werden und andererseits ein möglichst großer Volumenstrom erreicht werden.

Eine Einstellung der Vorlauftemperatur auf einen möglichst niedrigen Wert kann außerdem vorteilhaft sein, um Verteilverluste, also beispielsweise Energieverluste durch Wärmeabgabe von den Rohrleitungen, zu minimieren. Ferner kann hierdurch der Wirkungsgrad des Wärmeerzeugers maximiert werden. Eine Heizungsanlage, die ohne hydraulischen Abgleich betrieben wird, bietet Verschwendungspotential, da über die Heizkörper grundsätzlich eine deutlich größere Leistung verfügbar sein kann als nötig. Ist beispielsweise bei ein Fenster in einem beheizten Raum dauerhaft geöffnet, so kann bei einer hohen Vorlauftemperatur die Raumsolltemperatur trotz der Wärmeverluste gehalten werden. Der potentielle Nutzereinfluss auf den Energieverbrauch kann dadurch sehr groß werden.

Die erfindungsgemäße Heizungsanlage umfasst einen Temperatursensor im Vorlauf zum Ermitteln einer Vorlauftemperatur des Trägermediums und einen Temperatursensor im Rücklauf zum Ermitteln einer Rücklauftemperatur des Trägermediums. Das erfindungsgemäße Verfahren zum Betreiben der Heizungsanlage umfasst ein Schritt zum Ermitteln einer Temperaturspreizung in Abhängigkeit der ermittelten Vorlauftemperatur und der ermittelten Rücklauftemperatur, um die Pumpe in Abhängigkeit der ermittelten Temperaturspreizung und eines vorgegebenen Sollwerts der Temperaturspreizung zu betreiben. Die Temperaturspreizung kann beispielsweise als Differenz zwischen Vorlauftemperatur und Rücklauftemperatur ermittelt werden und ist ein Maß für die abgegebene Wärmemenge. Die Pumpe kann zum Beispiel durch eine direkte Regelung der Pumpendrehzahl in Abhängigkeit der aktuellen Temperaturspreizung betrieben werden. Hierdurch wird gleichzeitig sichergestellt, dass keine zu hohen Pumpendrücke und damit zu hohe Energieverbräuche realisiert werden

Ja nach Art des Wärmeerzeugers kann dessen Effizienz von der Rücklauftemperatur des zugeführten Trägermediums abhängig sein. Beispielsweise kann der Sollwert der Temperaturspreizung in Abhängigkeit einer charakteristischen Kondensationstemperatur des Wärmeerzeugers vorgegeben werden. Dies kann insbesondere bei Verwenden von Brennwertkesseln als Wärmeerzeuger vorteilhaft sein. Wird hingegen eine Wärmepumpe verwendet, so kann eine bestimmte Mindestrücklauftemperatur und/oder Vorlauftemperatur zum Betreiben der Wärmepumpe erforderlich sein. Diese wird im Allgemeinen auch zu einer höheren Effizienz der Wärmepumpe führen können. Eine niedrigere Temperaturspreizung kann zu einer Reduktion der benötigten Vorlauftemperatur führen, da die Heizflächenleistung von der mittleren Heizkörperübertemperatur abhängt. Durch das Betreiben der Pumpe in Abhängigkeit der Temperaturspreizung, kann die Effizienz der Heizungsanlage optimiert werden.

Bei einer optimalen Einstellung der Pumpe werden kann insbesondere ein Energiebedarf der Pumpe minimiert werden. Ferner kann eine Geräuschentwicklung durch einen unnötig hohen Druckabfall des Trägermediums an Ventilen (Stellgliedern) der Heizkörper vermieden werden. Ferner ist es möglich, unerwünschte Strömungsgeräusche des Trägermediums in den Rohrleitungen zu minimieren und eine ausreichende Spreizung der Heizungsanlage zu gewährleisten, wodurch zum Beispiel der Brennwertnutzen erhöht werden kann.

Die Aufgabe wird ferner gelöst durch eine Heizungsanlage in einem Gebäude mit mindestens zwei Räumen gemäß Anspruch 6. Die Heizungsanlage umfasst mindestens einen Heizkörper pro Raum und einen Wärmeerzeuger zum Erhitzen eines Trägermediums, das über einen Vorlauf zu den Heizkörpern fließt und über einen Rücklauf zurück zum Wärmeerzeuger fließt. Im Vorlauf oder im Rücklauf ist eine Pumpe zum Fördern des Trägermediums angeordnet. Die Heizungsanlage umfasst eine zentrale Regeleinrichtung zum Regeln des Wärmeerzeugers und der Pumpe. Die Heizkörper weisen jeweils ein Stellglied zum Einstellen eines Volumenstroms durch den Heizkörper und eine Einstelleinrichtung mit einem Temperatursensor zum Ermitteln einer Raumisttemperatur, einem Regler zum Einstellen einer Stellgliedöffnung des Stellglieds in Abhängigkeit einer jeweils vorgegebenen Raumsolltemperatur und der ermittelten Raumisttemperatur, und einer Kommunikationseinrichtung zum Kommunizieren mit der zentralen Regeleinrichtung auf. Die zentrale Regeleinrichtung ist konfiguriert, die Heizkörper eines Raumes im Aufheizbetrieb zu betreiben, falls in dem Raum eine Raumisttemperatur kleiner als eine vorgegebene Raumsolltemperatur ist, und die Differenz zwischen Raumisttemperatur und vorgegebener Raumsolltemperatur größer; als eine vorgegebene Temperaturdifferenz ist. Die zentrale Regeleinrichtung ist konfiguriert, einen Aufheizwert in Abhängigkeit einer Raumtemperaturänderung innerhalb eines festgelegten Zeitraums für jeden Raum mit Heizkörpern im Aufheizbetrieb zu ermitteln, falls Heizkörper in mehr als einem Raum im Aufheizbetrieb betrieben werden. Die zentrale Regeleinrichtung ist ferner konfiguriert, für jeden Heizkörper im Aufheizbetrieb einen oberen Grenzwerts der Stellgliedöffnung in Abhängigkeit des jeweils ermittelten Aufheizwerts und eines Mittelwerts aller ermittelten Aufheizwerte vorzugeben und die Heizkörper in Abhängigkeit der vorgegebenen oberen Grenzwerte zu betreiben.

Bei einer bevorzugten Heizungsanlage ist die zentrale Regeleinrichtung ferner konfiguriert, alle vorgegebenen oberen Grenzwerte der Stellgliedöffnungen zu erfassen, den Heizköpern mit dem größten vorgegebenen oberen Grenzwert der Stellgliedöffnung einen neuen oberen Grenzwert der Stellgliedöffnung vorzugeben und allen übrigen Heizköpern neue obere Grenzwerte der Stellgliedöffnungen in Abhängigkeit einer Differenz zwischen dem größten vorgegebenen oberen Grenzwert und dem neuen oberen Grenzwert vorzugeben.

Vorzugsweise ist die zentrale Regeleinrichtung ferner konfiguriert, die aktuell eingestellten Stellgliedöffnungen aller Heizkörper zu erfassen, eine Vorlaufsolltemperatur in Anhängigkeit einer Differenz zwischen der maximalen aktuell eingestellten Stellgliedöffnung und einem vorgegebenen Sollwert für die maximale Stellgliedöffnung zu ermitteln und den Wärmeerzeuger in Abhängigkeit der ermittelten Vorlaufsolltemperatur zu betreiben.

Eine erfindungsgemäße Heizungsanlage umfasst ferner einen Temperatursensor im Vorlauf zum Ermitteln einer Vorlauftemperatur des Trägermediums und einen Temperatursensor im Rücklauf zum Ermitteln einer Rücklauftemperatur des Trägermediums. Die zentrale Regeleinrichtung ist ferner dazu konfiguriert, eine Temperaturspreizung in Abhängigkeit der ermittelten Vorlauftemperatur und der ermittelten Rücklauftemperatur zu ermitteln und die Pumpe in Abhängigkeit der ermittelten Temperaturspreizung und eines vorgegebenen Sollwerts der Temperaturspreizung zu betreiben.

Bei der erfindungsgemäßen Heizungsanlage muss an den Heizkörperventilen keine Voreinstellung vorgenommen werden. Somit wird das Heizleistungspotential der Heizkörper nicht dauerhaft beschnitten. Ferner wird eine Verschmutzungsanfälligkeit der Ventile (Stellglieder) minimiert. Ein erreichbarer Vorteil ist, dass jederzeit und dynamisch sichergestellt werden kann, dass der Wärmeerzeuger mit einer optimalen Vorlauftemperatur betrieben wird. Gegenüber einem (in der Praxis sehr seltenen) Fall einer optimalen Heizkurveneinstellung kann bei Anwendung des erfindungsgemäßen Verfahrens durch Anpassen der Vorlauftemperatur zusätzlich auch auf variable innere und äußere Fremdwärmegewinne reagiert werden.

Gemäß dem erfindungsgemäßen Verfahren kann für jeden Heizkörper (beziehungsweise für mehrere Heizkörper in einem Raum) ein Regelbetrieb und ein Aufheizbetrieb definiert werden. Innerhalb einer mittels einer vorgegebenen Temperaturdifferenz definierten Schranke um die Raumsolltemperatur herum (Temperaturdifferenz z. B. +/-1,5 K) wird die Raumtemperatur jeweils über einen in der Einstelleinrichtung hinterlegten Algorithmus geregelt. Als Aktor fungiert hierbei das Stellglied, die Stellgröße ist der Volumenstrom durch den Heizkörper und die Regelgröße ist die Raumtemperatur. Liegt die Raumtemperatur über einem definierten Schwellwert (z.B. Raumsolltemperatur plus 1,5 K) wird das Stellglied (Ventil) voll geschlossen. Liegt die Raumtemperatur unter einem definierten Schwellwert (z.B. Raumtemperatur minus 1,5 K), so werden die Heizkörper in dem Raum im Aufheizbetrieb betrieben. Alle Heizkörper, die sich im Aufheizbetrieb befinden werden untereinander über das erfindungsgemäße Verfahren dynamisch abgeglichen, um ein gleichmäßiges Aufheizverhalten zu erreichen.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
**Figur 1** Fig. 1 zeigt eine Heizungsanlage.
**Figur 2** Fig. 2 zeigt einen beispielhaften zeitlichen Verlauf einer Raumtemperatur.
**Figur 3** Fig. 3 zeigt ein Ablaufdiagramm eines Verfahrens.
**Figur 4** Fig. 4 zeigt eine Heizungsanlage.
**Figur 5** Fig. 5 zeigt eine erfindungsgemäße Heizungsanlage.

### Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

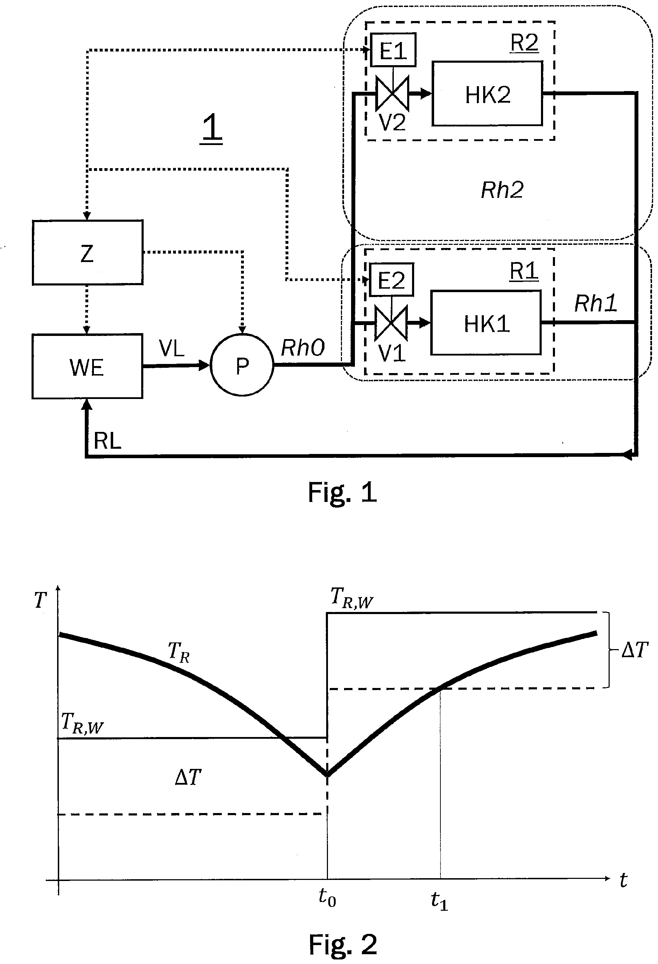

Figur 1 zeigt eine Heizungsanlage 1 für ein Gebäude mit mindestens zwei Räumen R1, R2, die jeweils mindestens einen Heizkörper HK1, HK2 aufweisen. Bei den Heizkörpern HK1, HK2 kann es sich um herkömmliche Wandheizkörper beispielsweise Radiatoren oder Kompaktheizkörper handeln. Die Heizkörper HK1, HK2 können aber auch Teil einer Fußbodenheizung sein. Das Gebäude kann auch weitere, nicht beheizte Räume umfassen.

Die Heizungsanlage 1 weist einen Wärmeerzeuger WE auf, bei dem es sich beispielsweise um einen mit Gas, Heizöl oder Holz als Brennstoff betriebenen Warmwasserkessel handeln kann. Über einen Vorlauf VL fließt ein vom Wärmeerzeuger erhitztes fluides Wärmeträgermedium, beispielsweise Wasser, zu den mindestens zwei Heizkörpern HK1, HK2. Über einen Rücklauf RL fließt das Wärmeträgermedium von den Heizkörpern HK1, HK2 zurück zum Wärmeerzeuger WE. Zum Fördern des Wärmeträgermediums ist beispielsweise im Vorlauf VL eine Pumpe P angeordnet. Die Pumpe P kann anstatt im Vorlauf VL auch im Rücklauf RL oder im Wärmeerzeuger WE selbst angeordnet sein.

Die Heizkörper HK1, HK2 weisen jeweils ein Ventil V1, V2 als Stellglied zum Einstellen eines Massenstroms beziehungsweise eines Volumenstroms des Wärmeträgermediums durch den jeweiligen Heizkörper HK1, HK2 auf. Hierzu wird jeweils ein Ventilhub (Stellgliedöffnung) eines Ventils V1, V2 über einen entsprechenden Aktor eingestellt. Als Ventil V1, V2 kann beispielsweise ein Danfoss RA-N 10 Ventil mit Voreinstellung N verwendet werden.

Die Heizkörper HK1, HK2 weisen jeweils eine Einstelleinrichtung E1, E2 mit einem Temperatursensor zum Ermitteln einer Raumisttemperatur *T_{R}* auf. Der Temperatursensor kann entweder ein Bestandteil der Einstelleinrichtung sein oder als externer Temperatursensor an einem günstigen Ort im Raum angeordnet sein.

Die Einstelleinrichtung E1, E2 weist ferner einen Regler zum Einstellen des Ventilhubs (Stellgliedöffnung) des Ventils V1, V2 auf. Die Einstelleinrichtung E1, E2 kann direkt am Heizköper HK1, HK2 oder beispielsweise an einer Wand des Raumes R1, R2 angeordnet sein. Über die Einstelleinrichtung E1, E2 oder die zentrale Regeleinrichtung Z kann ein Benutzer eine gewünschte Raumsolltemperatur *T_{R,W}* vorgeben. Wenn mehrere Heizkörper in einem Raum vorhanden sind, kann die in dem Raum angeordnete Einstelleinrichtung konfiguriert sein, alle Ventile der Heizkörper eines Raumes einzustellen.

Der Regler der Einstelleinrichtung ist konfiguriert, den Ventilhub eines Ventils (oder bei mehreren Heizkörpern in einem Raum entsprechend mehrerer Ventile) in Abhängigkeit einer jeweils pro Raum vorgegebenen Raumsolltemperatur *T_{R,W}* und der ermittelten Raumisttemperatur *T_{R}* zu regeln, so dass eine Einzelraumregelung der Raumtemperatur verwirklicht wird.

Die Einstelleinrichtung E1, E2 umfasst eine Kommunikationseinrichtung zum Kommunizieren mit einer zentralen Regeleinrichtung Z der Heizungsanlage 1. Die Kommunikationseinrichtung kann entweder über eine geeignete drahtgebundene Leitung oder drahtlos mit der Regeleinrichtung Z kommunizieren. Die Einstelleinrichtungen E1, E2 eines Gebäudes können auch dazu ausgelegt sein, untereinander zu kommunizieren, so dass zum Beispiel Daten untereinander ausgetauscht oder an die Regeleinrichtung Z weitergeleitet werden können.

Die zentrale Regeleinrichtung Z der Heizungsanlage 1 ist konfiguriert zum Regeln des Wärmeerzeugers WE und der Pumpe P. Die zentrale Regeleinrichtung Z kann eine Komponente des Wärmeerzeugers WE oder eine separate Vorrichtung sein, die mit dem Wärmeerzeuger WE kommuniziert. Die Regeleinrichtung ist ferner konfiguriert, mit den Einstelleinrichtungen E1, E2 der Heizkörper HK1, HK2 zu kommunizieren, beispielsweise um Daten auszulesen oder um Sollwerte vorzugeben. Die Kommunikation zwischen der zentralen Regeleinrichtung Z, der Pumpe P, dem Wärmeerzeuger WE und den Einstelleinrichtungen E1, E2 kann jeweils drahtgebunden oder drahtlos erfolgen. Hierzu umfassen die zentrale Regeleinrichtung Z, die Pumpe P, der Wärmeerzeuger WE und die Einstelleinrichtungen E1, E2 entsprechende Schnittstellen.

Die beiden Räume R1, R2 haben jeweils eine in etwa gleich große Heizlast sowie thermische Kapazität. Die beiden Heizköper HK1, HK2 weisen auch jeweils eine gleich große Heizkörpernormleistung auf. Die Heizungsanlage 1 ist so ausgelegt, dass die Heizkörper HK1, HK2 im Auslegungsfall bei einer vom Wärmeerzeuger WE bereitgestellten Vorlauftemperatur *T_{VL}* von 60°C einen Volumenstrom von 100 l/h benötigen, um eine vorgegebene Raumsolltemperatur *T_{R,W}* zu erreichen. Im Auslegungsfall soll dieser Volumenstrom von 100 l/h bei einem Ventilhub von 100% erreicht werden, also wenn die Ventile V1, V2 vollständig geöffnet sind.

Die in Fig. 1 dargestellte Heizungsanlage 1 lässt sich in drei hydraulische Widerstände Rh0, Rh1, Rh2 aufteilen. Für die Widerstände werden beispielhaft die folgenden Werte in Einheiten von PA/((l/h)²) angenommen: Rh0=0,1, Rh1=0,1, Rh2=0,9. Die Widerstände Rh1 und Rh2 werden jeweils bei vollständig geöffneten Ventilen V1, V2 (100%) der Heizkörper HK1, HK2 erreicht. Der hydraulische Widerstand Rh2 ist somit sehr viel größer als Rh1. Dies kann in einem Gebäude beispielsweise dann der Fall sein, wenn sich der Raum R1 näher am Wärmeerzeuger WE befindet als der andere Raum R2.

Durch die ungleichen hydraulischen Widerstände Rh1, Rh2 der beiden Heizkörper HK1, HK2 kann es im Aufheizfall, insbesondere bei großer Abweichung zwischen Raumisttemperatur *T_{R}* und Raumsolltemperatur *T_{R,W}*, dazu kommen, dass sich beide Ventile V1, V2 komplett öffnen. Dann können sich sehr unterschiedliche Volumenströme durch die Heizkörper HK1, HK2 einstellen. Beispielsweise kann durch den Heizkörper HK1 ein Volumenstrom von ungefähr 268 l/h fließen und durch den Heizkörper HK2 ein Volumenstrom von nur ungefähr 90 l/h. Heizkörper HK1 wird also gegenüber dem Auslegungsfall deutlich überversorgt. Raum R1 wird sich daher deutlich schneller aufheizen als Raum R2. Darüber hinaus kann es dazu kommen, dass sich die Rücklauftemperatur *T_{RL}* gegenüber dem Auslegungsfall erhöht, was eine Verschlechterung des Wirkungsgrads des Wärmeerzeugers WE zur Folge haben kann.

Heizungsanlagen wie die Heizungsanlage 1 werden in der Praxis häufig im Auslieferungszustand betrieben, ohne dass eine Optimierung stattgefunden hat. Dabei ist die Heizkurve einer solchen Heizungsanlage oft zu hoch eingestellt, so dass eine höhere Vorlauftemperatur *T_{VL}* als nötig von beispielsweise 70°C bei Auslegungsbedingungen bereitgestellt wird. Dabei wird oft auch eine höher als benötigte Pumpenförderhöhe von beispielsweise 20000 Pa eingestellt.

Gemäß dem aus dem Stand der Technik bekannten konventionellen statischen hydraulischen Abgleich kann der hydraulische Widerstand Rh1 am Heizkörper HK1 durch Einbringen eines zusätzlichen hydraulischen Widerstandes, zum Beispiel durch eine Voreinstellung am Ventil V1 des Heizkörpers HK1, auf Rh1=0.9 Pa/(l/h)² angehoben werden, so dass die beiden hydraulischen Widerstände Rh1, Rh2 gleich groß sind. Gleichzeitig kann die Pumpenleistung auf eine Förderhöhe von 13000 Pa reduziert werden und die Heizkurve so eingestellt werden, dass bei Auslegungstemperatur eine Vorlauftemperatur von 60°C erreicht wird.

Diese Einstellungen sind statisch. Dies kann gewichtige Nachteile zur Folge haben, da diese Einstellungen in allen zukünftigen Betriebszuständen aktiv sind. Gibt beispielsweise ein Nutzer an Heizkörper HK2 eine reduzierte Raumsolltemperatur *T_{R,W}* vor, so dass dieser in eine Phase der Temperaturabsenkung (Absenkphase) übergeht, so wird das Ventil V2 komplett schließen. Für den bedarfsgerechten Normalbetrieb am anderen Heizkörper HK1 (benötigter Massenstrom 100 l/h im Auslegungszustand) würde demnach im Ausgangszustand der Hydraulik bei gleichbleibender Pumpenleistung eine niedrigere Vorlauftemperatur *T_{VL}* und/oder eine niedrigere Pumpenleistung (2000 Pa statt 10000 Pa) ausreichen. Im konventionellen Fall des hydraulischen Abgleiches wird aber der hydraulische Widerstand dieses Stranges statisch erhöht, wodurch nahezu dieselbe Vorlauftemperatur *T_{VL}* und Pumpenleistung (10000 Pa statt 13000 Pa, wenn beide Heizkörper versorgt werden müssen) zur bedarfsgerechten Versorgung von Raum R1 vonnöten sind, obwohl der Heizkörper in Raum R2 nicht versorgt werden muss. Somit geht hier ein Einsparpotential verloren, da keine Absenkung von Vorlauftemperatur *T_{VL}* und/oder Pumpenleistung möglich sind. Weiter wird der Nutzer nach Durchführung des konventionellen, statischen hydraulischen Abgleiches registrieren, dass nun Raum R1 deutlich langsamer die Raumsolltemperatur *T_{R,W}* erreicht als zuvor, während Raum R2 nicht schneller als zuvor aufheizt, da zwar der Volumenstrom leicht größer wird (100 l/h anstatt 90 l/h) aber auch die Vorlauftemperatur *T_{VL}* abgesenkt wurde. Diese potentiellen Nachteile werden durch das erfindungsgemäße Verfahren vermieden.

Fig. 2 illustriert einen zeitlichen Verlauf der Raumtemperatur *T_{R}* in einem Raum R1, R2, wie er beispielsweise von einem Temperatursensor einer Einstelleinrichtung E1, E2 erfasst wird. Am Anfang des dargestellten zeitlichen Verlaufs liegt die Raumtemperatur *T_{R}* über der Raumsolltemperatur *T*_{*R*,*W*}, so dass die Heizkörper HK1, HK2 des Raumes R1, R2 im Regelbetrieb betrieben werden. Auch beim weiteren Absinken der Raumtemperatur *T_{R}* unter die Raumsolltemperatur *T_{R,W}* wird noch kein Aufheizbetrieb eingeleitet, solange die Raumtemperatur *T_{R}* noch innerhalb einer vorgegebenen Temperaturdifferenz Δ*T* liegt. Zum Zeitpunkt *t*₀ wird die Raumsolltemperatur *T_{R,W}* auf einen neuen Wert angehoben. Da nun die Differenz zwischen Raumtemperatur *T_{R}* und Raumsolltemperatur *T_{R,W}* größer als die vorgegebene Temperaturdifferenz Δ*T* ist, werden die Heizkörper HK1, HK2 des Raumes R1, R2 bis zum Zeitpunkt *t*₁, in dem die Differenz zwischen Raumtemperatur *T_{R}* und Raumsolltemperatur *T_{R,W}* kleiner wird als die vorgegebene Temperaturdifferenz Δ*T,* im Aufheizbetrieb betrieben.

Neben der in Fig. 2 als gestrichelte Linie dargestellten unteren Temperaturschranke, die um die vorgegebene Temperaturdifferenz Δ*T* unter der Raumsolltemperatur *T_{R,W}* liegt, kann auch eine obere Temperaturschranke definiert werden, so dass der Betriebszustand erst bei einem Überschreiten der Raumsolltemperatur *T_{R,W}* um eine Differenz größer als die vorgegebene Temperaturdifferenz Δ*T* geändert wird. In diesem Fall können die Ventile V1, V2 der Heizkörper HK1, HK2 in dem Raum zum Beispiel komplett geschlossen werden.

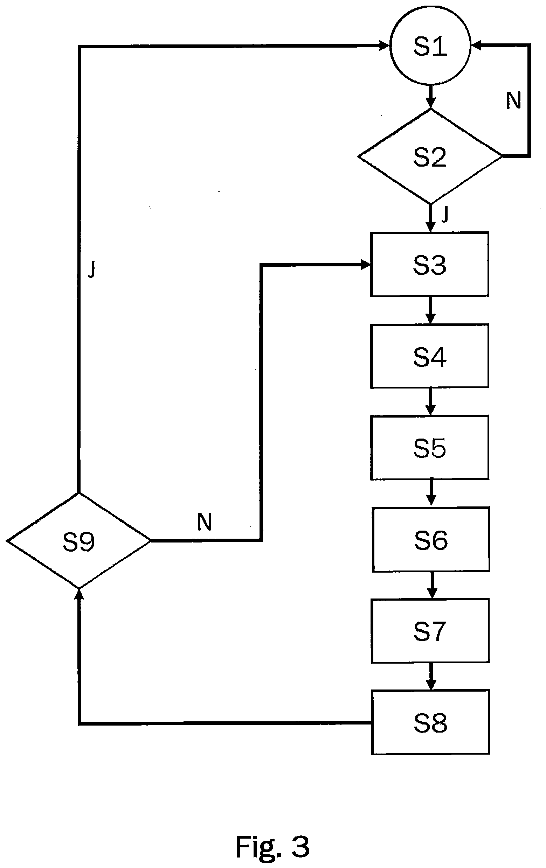

Fig. 3 zeigt ein Ablaufdiagramm eines Verfahrens zum Betreiben einer Heizungsanlage 1, wie sie zum Beispiel in Fig. 1 dargestellt ist. Im Startzustand S1 des Verfahrens sind die Ventile V1, V2 (Stellglieder) der Heizkörper HK1, HK2 mit einem Ventilhub (Stellgliedöffnung) zwischen 0% und 100% geöffnet. Dieser Wert wird im Folgenden als Startwert für das Verfahren bezeichnet. Ferner wird im Schritt S1 geprüft, ob in einem Raum R1, R2 eine Raumisttemperatur *T_{R}* kleiner als eine vorgegebene Raumsolltemperatur *T_{R,W}* ist, und ob die Differenz zwischen Raumisttemperatur *T_{R}* und vorgegebener Raumsolltemperatur *T_{R,W}* größer als eine vorgegebene Temperaturdifferenz Δ*T* ist. Der Zusammenhang zwischen vorgegebener Temperaturdifferenz Δ*T,* Raumisttemperatur *T_{R}* und vorgegebener Raumsolltemperatur *T_{R,W}* wurde oben anhand von Fig. 2 beschrieben. Ist die Raumisttemperatur *T_{R}* um mehr als die vorgegebene Temperaturdifferenz Δ*T* kleiner als die Raumsolltemperatur *T_{R,W}*, so werden die Heizkörper HK1, HK2 des betreffenden Raumes R1, R2 im Aufheizbetrieb betrieben. Die Einstelleinrichtung E1, E2 meldet an die zentrale Regeleinrichtung Z, ob sich die Heizkörper HK1, HK2 im Aufheizbetrieb befinden. Alternativ kann die zentrale Regeleinrichtung Z ermitteln, ob sich die Heizkörper HK1, HK2 jeweils im Aufheizbetrieb befinden.

In Schritt S2 prüft die zentrale Regeleinrichtung Z, ob Heizkörper HK1, HK2 in mehr als einem Raum R1, R2 im Aufheizbetrieb betrieben werden. Ist dies der Fall (J), so geht das Verfahren weiter mit Schritt S3. Ist dies nicht der Fall (N), werden also nur in höchstens einem Raum R1, R2 Heizkörper HK1, HK2 im Aufheizbetrieb betrieben, so kehrt das Verfahren zurück zu Schritt D1.

Im Schritt S3 wird für jeden Raum R1, R2 mit Heizkörpern HK1, HK2 im Aufheizbetrieb eine Aufheizwert *Ṫ_{R}* in Abhängigkeit einer Raumtemperaturänderung *dT_{R}* innerhalb eines festgelegten Zeitraums *dt* ermittelt. Der Aufheizwert *Ṫ_{R}* charakterisiert also jeweils die zeitliche Temperaturänderung eines Raumes. Der Zeitraum *dt* wird dabei zweckmäßigerweise so gewählt, dass genügend große Raumtemperaturänderungen *dT_{R}* erfasst werden können. Beispielsweise kann der Zeitraum dt zehn bis fünfzehn Minuten betragen.

Im nächsten Schritt S4 wird ein Mittelwert 〈*Ṫ_{R}*〉 aller ermittelten Aufheizwerte *Ṫ_{R}* berechnet. Anschließend, in Schritt S5 wird bestimmt, ob eine Abweichung zwischen dem Aufheizwert *Ṫ_{R}* eines Raumes R1, R2 vom berechneten Mittelwert 〈*Ṫ_{R}*〉 vorliegt, und wie groß die Abweichung gegebenenfalls ist. Da der hydraulische Abgleich darauf abzielt, alle Räume gleichmäßig Aufzuheizen, soll die Abweichung vom Mittelwert 〈*Ṫ_{R}*〉 so klein wie möglich sein.

Im Schritt S6 wird für die Ventile V1, V2 aller Heizkörper HK1, HK2 im Aufheizbetrieb ein oberer Grenzwert *Hₘₐₓ* des Ventilhubs (der Stellgliedöffnung) in Abhängigkeit der in S5 berechneten Abweichung vom Mittelwert 〈*Ṫ_{R}*〉 ermittelt.

Als nächstes werden in Schritt S7 die ermittelten oberen Grenzwerte *Hₘₐₓ* der Ventilhübe miteinander verglichen. Dem Heizköper HK1, HK2 mit dem größten vorgegebenen oberen Grenzwert *Hₘₐₓ* des Ventilhubs wird ein neuer oberer Grenzwert *H_{max,neu}* des Ventilhubs vorgegeben, so dass der neue vorgegebene maximale obere Grenzwert *H_{max,neu}* so groß wie möglich ist. Zum Beispiel kann der Regeleinrichtung Z vorgegeben sein, dass das Ventil V1, V2 mit dem größten oberen *Hₘₐₓ* Grenzwert mit einem neuen oberen Grenzwert *H_{max,neu}* von 90% betrieben werden soll. Allen übrigen Heizköpern HK1, HK2 können entsprechend neue obere Grenzwerte des Ventilhubs in Abhängigkeit einer Differenz zwischen dem größten vorgegebenen oberen Grenzwert und dem neuen oberen Grenzwert vorgegeben werden.

Im Schritt S8 werden die oberen Grenzwerte *Hₘₐₓ* an die entsprechenden Einstelleinrichtungen E1, E2 übertragen und die Heizkörper mit den neuen oberen Grenzwerten betrieben. Anschließend kann in S9 geprüft werden, ob einer der Heizkörper HK1, HK2 den Aufheizbetrieb verlassen hat. Ist dies der Fall (J), so beginnt das Verfahren erneut mit S1. Hat keiner der Heizkörper HK1, HK2 den Aufheizbetrieb verlassen, so wird das Verfahren ab Schritt S3 erneut ausgeführt.

Alternativ kann bei dem oben beschriebenen Verfahren auch die zeitliche Änderung der Sollwertverstellung zur Angleichung der Aufheizgeschwindigkeiten in mehreren Räumen erfolgen. Für zwei betrachtete Räume R1, R2 wird zu einem Zeitpunkt *t*₀ ein Sprung des Sollwertes vorgegeben (siehe Fig. 2), so dass die Heizkörper HK1, HK2 der Räume R1, R2 in eine Aufheizphase übergehen. Der eine Raum R1 heizt sich aufgrund einer günstigen Hydraulik (geringerer hydraulischer Widerstand Rh1) schneller auf als Raum R2 mit einem größeren hydraulischen Widerstand Rh2. Um die Aufheizgeschwindigkeiten *Ṫ_{R}* der beiden Räume R1, R2 anzugleichen, wird in Raum R1 eine langsamere Änderung des Sollwertes *T_{R,W}* als in Raum R2 vorgegeben. Dies kann beispielsweise über eine Zeitkonstante eines aus der Regelungstechnik wohlbekannten PT1-Filters geschehen. Dabei kann eine Anpassung der Filterzeitkonstante entweder in kürzeren Zeitabständen während des Aufheizens ähnlich wie bei der oben beschriebenen Ventilhubbegrenzung erfolgen oder jeweils am Ende des Aufheizvorganges. Ein erreichbarer Vorteil des ersten Falles ist eine schnellere Adaption an die Heizungsanlage, während im zweiten Fall eine deutlich einfachere Initialisierung des Filters möglich ist. Ein erreichbarer Vorteil des alternativen Verfahrens gegenüber der Hubbegrenzung ist, dass gleichzeitig eine Optimierung der Regelungsfunktion erfolgt, da aufgrund der langsamen Annäherung an die neue Raumsolltemperatur *T_{R,W}* ein Überschwingen der Raumtemperatur *T_{R}* beim Arbeitspunktwechsel minimiert wird. Daher können die beiden Varianten des Verfahrens auch miteinander kombiniert werden.

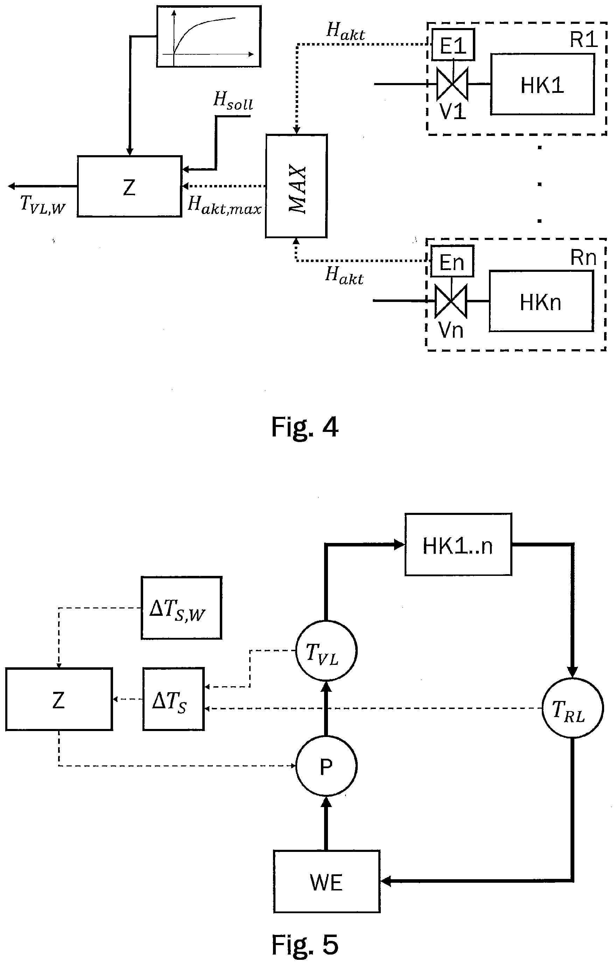

Fig. 4 zeigt eine Heizungsanlage 1, die im Wesentlichen der Heizungsanlage 1 der Fig.1 entspricht, wobei die Heizungsanlage 1 eine im Wesentlichen beliebige Anzahl n an Heizkörpern HK1 bis HKn in einer Vielzahl von Räumen R1 bis Rn umfasst. Die zentrale Regeleinrichtung Z ist konfiguriert, die aktuell eingestellten Ventilhübe (Stellgliedöffnungen) *Hₐₖₜ* aller Ventile (Stellglieder) V1 bis Vn der Heizkörper HK1 bis HKn zu erfassen. Eine externe oder intern in der Regeleinrichtung Z verbaute Elektronik MAX ermittelt aus den aktuell eingestellten Ventilhüben *Hₐₖₜ* einen Maximalwert *H_{akt,max}.*Die zentrale Steuereinrichtung Z ermittelt dann in Abhängigkeit einer Differenz zwischen dem maximalen aktuell eingestellten Ventilhub *H*_{*akt*,*max*} und einem vorgegebenen Sollwert *Hₛₒₗₗ* für den maximalen Ventilhub einen Sollwert *T_{VL,W}* für die Vorlauftemperatur.

Insbesondere prüft die zentrale Regeleinrichtung Z, ob der maximale aktuell eingestellte Ventilhub *H_{akt,max}* größer oder kleiner als der vorgegebene Sollwert *Hₛₒₗₗ* für den maximalen Ventilhub ist. Eine hohe Vorlauftemperatur *T_{VL}* kann dazu führen, dass die Einstelleinrichtungen E1 bis En in den einzelnen Räumen R1 bis Rn die Ventile V1 bis Vn der Heizköper HK1 bis HKn mit relativ kleinen Ventilhüben *Hₐₖₜ* betreibt, da schon ein kleiner Volumenstrom zu einer ausreichenden Heizleistung zum Aufheizen der Räume führt.

Ziel des Verfahrens ist es, die Heizungsanlage 1 mit einer möglichst niedrigen Vorlauftemperatur *T_{VL}* zu betreiben. Stellt die zentrale Regeleinrichtung Z also fest, dass der maximale aktuell einstellte Ventilhub *H_{akt,max}* kleiner als ein vorgegebener Sollwert *Hₛₒₗₗ* ist, so kann die Vorlauftemperatur *T_{VL}* abgesenkt werden. Dies führt dazu, dass die Einstelleinrichtungen E1..En in den einzelnen Räumen R1...Rn die Ventile V1..Vn weiter öffnen, um eine gleichbleibende Heizleistung zu erzielen. Beispielsweise kann der Sollwert *Hₛₒₗₗ* für den maximalen Ventilhub 90% betragen. Die zentrale Regeleinrichtung Z senkt den Sollwert *T_{VL,W}* der Vorlauftemperatur *T_{VL}* so lange schrittweise, zum Beispiel um eine festgelegte Temperaturänderung ab, bis der maximal aktuell einstellte Ventilhub *H_{akt,mαx}* dem Sollwert *Hₛₒₗₗ* entsprechend 90% beträgt.

Eine Erhöhung der Vorlauftemperatur *T_{VL}* wird hingegen bei einer Überschreitung des Sollwerts *Hₛₒₗₗ* vorgenommen, indem ein entsprechend höherer Sollwert *T_{VL,W}* der Vorlauftemperatur erzeugt wird. Somit ist die zentrale Regeleinrichtung Z konfiguriert, die Vorlauftemperatur *T_{VL}* auf einen maximalen Ventilhub zu regeln. Hierdurch kann zum einen die Vorlauftemperatur *T_{VL}* auf einen möglichst kleinen Wert eingestellt werden und andererseits ein möglichst großer Volumenstrom erreicht werden. Der Sollwert *T_{VL,W}* der Vorlauftemperatur wird üblicherweise anhand einer Heizkennlinie bestimmt. Das beschriebene Verfahren kann somit eine Korrektur der aus der Heizkennlinie ermittelten Vorlaufsolltemperatur *T_{VL,W}* bestimmen.

Bei der beschriebenen Optimierung der Vorlauftemperatur *T_{VL}* kann der Sollwert *T_{VL,W}* der Vorlauftemperatur so vorgegeben werden, dass sich der Hub eines Ventiles V1...Vn entsprechend einem vorgegebenen Sollwert einstellt. Dabei ist zu berücksichtigen, dass die zentrale Regeleinheit Z nur die Vorlauftemperatur *T_{VL}* beeinflusst, während der Ventilhub immer lokal von der Einstelleinrichtung E1...En geregelt wird. Die zentrale Regeleinrichtung Z kann aber auch konfiguriert sein, selbst die Funktion der lokalen Regler der Einstelleinrichtungen E1...En zu übernehmen. In diesem Fall würde die zentrale Regeleinrichtung Z die jeweiligen Ventilhübe der Ventile V1...Vn einstellen.

Während der Aufheizphase werden die Ventilhübe jeweils durch den oberen Grenzwert *Hₘₐₓ* gemäß dem anhand von Fig. 3 beschriebenen Verfahrens begrenzt. In Abhängigkeit des oberen Grenzwerts *Hₘₐₓ* kann in Kombination mit der Vorlauftemperaturoptimierung ein schnelles oder ein langsameres Aufheizen nach Heizkurve erreicht werden. Wird der obere Grenzwert *Hₘₐₓ* auf den Sollwert *Hₛₒₗₗ* eingestellt, so ergibt sich ein Aufheizen mit einer Vorlaufsolltemperatur *T_{VL,W}* gemäß Heizkurve. Ist der obere Grenzwert *Hₘₐₓ* größer als der Sollwert *H_{soll,}* so kann ein Schnellaufheizen mit angehobener Vorlaufsolltemperatur *T_{VL,W}* realisiert werden, da die zentrale Regeleinrichtung den Sollwert *T_{VL,W}* der Vorlauftemperatur dann automatisch über den Heizkurvenwert anhebt. Die Entscheidung kann gemäß dem erfindungsgemäßen Verfahren dynamisch im Betrieb je nach individueller Situation automatisch getroffen werden. Dies kann beispielsweise über eine dynamische Effizienzabschätzung, anhand einer Kenntnis des eingesetzten Wärmeerzeugers, in Abhängigkeit der eingestellten Zeitprogramme und/oder in Abhängigkeit von Wünschen des Benutzers erfolgen.

Als oberer Grenzwert *Hₘₐₓ* sei beispielsweise ein Wert von 90% vorgegeben. Der Sollwert *Hₛₒₗₗ* beträgt zum Beispiel 80%. Das bedeutet, dass ein Schnellaufheizen realisiert wird, da zum Beispiel ein Benutzer ein schnelles Aufheizen eines Raumes R1...Rn zum Ziel gesetzt hat. Als maximaler Ventilhub kann sich während des Aufheizens somit ein Wert von 90% einstellen. Die Abweichung vom Sollwert *Hₛₒₗₗ* beträgt somit 10% und die Vorlaufsolltemperatur *T_{VL,W}* des Heizkreises wird von der Regeleinrichtung Z um beispielsweise 20 K gegenüber der Heizkurve angehoben. Hierdurch wird ein Leistungsüberschuss bereitgestellt, der ein schnelles Aufheizen bewirken kann.

Fig. 5 zeigt eine erfindungsgemäße Konfiguration der Heizungsanlage 1 aus Fig. 1, wobei die Heizungsanlage 1 ferner einen Temperatursensor im Vorlauf VL zum Ermitteln einer Vorlauftemperatur *T_{VL}* des Trägermediums und einen Temperatursensor im Rücklauf RL zum Ermitteln einer Rücklauftemperatur *T_{RL}* des Trägermediums umfasst. Die Messwerte der beiden Temperatursensoren werden von der zentralen Regeleinrichtung Z erfasst, so das eine Temperaturspreizung Δ*T_{S}* in Abhängigkeit der ermittelten Vorlauftemperatur *T_{VL}* und der ermittelten Rücklauftemperatur *T_{RL}* ermitteln wird. Die zentrale Regeleinrichtung Z betreibt dann die Pumpe P in Abhängigkeit der ermittelten Temperaturspreizung Δ*T_{S}* und eines vorgegebenen Sollwerts der Temperaturspreizung Δ*T_{S,W}.*

Die Temperaturspreizung Δ*T_{S}* kann dynamisch im laufenden Betrieb gewählt werden. Dadurch kann die Heizungsanlage 1 den Anforderungen verschiedener Betriebszustände gerecht werden. Beispielsweise kann es ein individuelles Ziel beim Betreiben der Heizungsanlage 1 sein, Aufheizvorgänge möglichst schnell abzuschließen. Die Temperaturspreizung Δ*T_{S}* kann dementsprechend während der Aufheizvorgänge klein gewählt werden. Der Sollwert der Temperaturspreizung Δ*T_{S,W}* kann im Sinne der Erfindung auch so gewählt werden, dass der Wärmeerzeuger WE mit möglichst hoher Effizienz betrieben werden kann. Beispielsweise kann bei Verwendung eines Brennwertkessels auf einen hohen Sollwert der Temperaturspreizung ΔT*_{S,W}* von beispielsweise 20 bis 25 K bei möglichst niedriger Rücklauftemperatur *T_{RL}* geregelt werden. Bei Fußboden- und Wärmepumpenheizungen kann hingegen auf einen kleinen Sollwert der Temperaturspreizung Δ*T_{S,W}* von beispielsweise 5 bis 10 K geregelt werden, um eine gleichmäßige Fußbodentemperatur und einen effizienten Wärmepumpenbetrieb sicherzustellen. Steht ein Außentemperaturmesswert zur Verfügung kann der Sollwert der Temperaturspreizung ΔT*_{S,W}* auch in Abhängigkeit der Außentemperatur gewählt werden. Insbesondere kann der Sollwert der Temperaturspreizung ΔT*_{S,W}* im laufenden Betrieb der Heizungsanlage 1 stetig adaptiv angepasst werden, um die Gesamtsystemeffizienz zu verbessern.

### Bezugszeichen liste

- 1: Heizungsanlage
- R1: erster Raum
- R2: zweiter Raum
- WE: Wärmeerzeuger
- VL: Vorlauf
- RL: Rücklauf
- HK1: erster Heizkörper
- HK2: zweiter Heizkörper
- V1: erstes Ventil (Stellglied)
- V2: zweites Ventil (Stellglied)
- P: Pumpe
- E1: erste Einstelleinrichtung
- E2: zweite Einstelleinrichtung
- Z: zentrale Regeleinrichtung

## Patentansprüche

1. Verfahren zum Betreiben einer Heizungsanlage (1) in einem Gebäude mit mindestens zwei Räumen (R1, R2), wobei die Heizungsanlage (1) umfasst:
mindestens einen Heizkörper (HK1, HK2) pro Raum (R1, R2);
einen Wärmeerzeuger (WE) zum Erhitzen eines Trägermediums, das über einen Vorlauf (VL) zu
den Heizkörpern (HK1, HK2) fließt und über
einen Rücklauf (RL) zurück zum Wärmeerzeuger (WE) fließt,
eine im Vorlauf (VL) oder Rücklauf (RL) angeordnete Pumpe (P) zum Fördern des Trägermediums,
einen Temperatursensor im Vorlauf (VL) zum Ermitteln einer Vorlauftemperatur (*T_{VL}*) des Trägermediums,
einen Temperatursensor im Rücklauf (RL) zum Ermitteln einer Rücklauftemperatur (*T_{RL}*) des Trägermediums, und
eine zentrale Regeleinrichtung (Z) zum Regeln des Wärmeerzeugers (WE) und der Pumpe (P),
wobei die Heizkörper (HK1, HK2) jeweils:
ein Stellglied (V1, V2) zum Einstellen eines Volumenstroms durch den Heizkörper (HK1, HK2) und
eine Einstelleinrichtung (E1, E2) mit
einem Temperatursensor zum Ermitteln einer Raumisttemperatur (*T_{R}*),
einem Regler zum Einstellen einer Stellgliedöffnung des Stellglieds (V1, V2) in Abhängigkeit einer jeweils vorgegebenen Raumsolltemperatur (*T_{R,W}*) und der ermittelten Raumisttemperatur (*T_{R}*), und
einer Kommunikationseinrichtung zum Kommunizieren mit der zentralen Regeleinrichtung (Z)
umfassen, wobei das Verfahren die folgenden Schritte umfasst:
falls in einem Raum (R1, R2) eine Raumisttemperatur (*T_{R}*) kleiner als eine vorgegebener Raumsolltemperatur (*T_{R,W}*) ist, und die Differenz zwischen Raumisttemperatur (*T_{R}*) und vorgegebener Raumsolltemperatur (*T_{R,W}*) größer als eine vorgegebene Temperaturdifferenz (Δ*T*) ist, Betreiben der Heizkörper (HK1, HK2) des Raumes (R1, R2) im Aufheizbetrieb;
falls Heizkörper (HK1, HK2) in mehr als einem Raum (R1, R2) im Aufheizbetrieb betrieben werden, Ermitteln eines Aufheizwerts (*Ṫ_{R}*) in Abhängigkeit einer Raumtemperaturänderung (*dT_{R}*) innerhalb eines festgelegten Zeitraums (*dt*) für jeden Raum (R1, R2) mit Heizkörpern (HK1, HK2) im Aufheizbetrieb;
für jeden Heizkörper (HK1, HK2) im Aufheizbetrieb: Vorgeben eines oberen Grenzwerts (*Hₘₐₓ*) der Stellgliedöffnung in Abhängigkeit des jeweils ermittelten Aufheizwerts (*Ṫ_{R}*) und eines Mittelwerts (〈*Ṫ_{R}*〉) aller ermittelten Aufheizwerte (*Ṫ_{R}*);
Betreiben der Heizkörper (HK1, HK2) in Abhängigkeit der vorgegebenen oberen Grenzwerte (*Hₘₐₓ*);
Ermitteln einer Temperaturspreizung (Δ*Tₛ*) in Abhängigkeit der ermittelten Vorlauftemperatur (*T_{VL}*) und der ermittelten Rücklauftemperatur (*T_{RL}*); und
Betreiben der Pumpe (P) in Abhängigkeit der ermittelten Temperaturspreizung (Δ*T_{S}*) und eines vorgegebenen Sollwerts der Temperaturspreizung (Δ*T_{S,W}*)*.*

2. Verfahren nach Anspruch 1, wobei das Verfahren ferner umfasst:
Erfassen aller vorgegebenen oberen Grenzwerte (*Hₘₐₓ*) der Stellgliedöffnungen;
für Heizköper (HK1, HK2) mit dem größten vorgegebenen oberen Grenzwert der Stellgliedöffnung: Vorgeben eines neuen oberen Grenzwerts (*H_{max,neu}*) der Stellgliedöffnung und
für alle übrigen Heizköper (HK1, HK2): Vorgeben neuer oberer Grenzwerte der Stellgliedöffnung in Abhängigkeit einer Differenz zwischen dem größten vorgegebenen oberen Grenzwert und dem neuen oberen Grenzwert.

3. Verfahren nach Anspruch 1, wobei das Verfahren ferner umfasst:
Erfassen der aktuell eingestellten Stellgliedöffnungen (*Hₐₖₜ*) aller Heizkörper (HK1, HK2);
Ermitteln einer Vorlaufsolltemperatur (*T_{VL,W}*) in Anhängigkeit einer Differenz zwischen der maximalen aktuell eingestellten Stellgliedöffnung (*H_{akt,max}*) und einem vorgegebenen Sollwert (*Hₛₒₗₗ*) für die maximale Stellgliedöffnung und
Betreiben des Wärmeerzeugers (WE) in Abhängigkeit der ermittelten Vorlaufsolltemperatur (*T_{VL,W}*)*.*

4. Verfahren nach Anspruch 3, wobei:
die Vorlaufsolltemperatur (*T_{VL,W}*) abgesenkt wird, falls die maximale aktuell eingestellte Stellgliedöffnung (*H_{akt,max}*) kleiner als der vorgegebene Sollwert (*Hₛₒₗₗ*) für die maximale Stellgliedöffnung ist oder
die Vorlaufsolltemperatur (*T_{VL,W}*) erhöht wird, falls die maximale aktuell eingestellte Stellgliedöffnung (*H_{akt,mαx}*) größer als der vorgegebene Sollwert (*Hₛₒₗₗ*) für die maximale Stellgliedöffnung ist.

5. Verfahren nach Anspruch 1, wobei der Sollwert der Temperaturspreizung (Δ*T_{S,W}*) in Abhängigkeit einer charakteristischen Kondensationstemperatur des Wärmeerzeugers (WE) vorgegeben wird.

6. Heizungsanlage (1) in einem Gebäude mit mindestens zwei Räumen (R1, R2), wobei die Heizungsanlage (1) umfasst:
mindestens einen Heizkörper (HK1, HK2) pro Raum (R1, R2);
einen Wärmeerzeuger (WE) zum Erhitzen eines Trägermediums, das über einen Vorlauf (VL) zu
den Heizkörpern (HK1, HK2) fließt und über
einen Rücklauf (RL) zurück zum Wärmeerzeuger (WE) fließt,
eine im Vorlauf (VL) oder Rücklauf (RL) angeordnete Pumpe (P) zum Fördern des Trägermediums,
einen Temperatursensor im Vorlauf (VL) zum Ermitteln einer Vorlauftemperatur (*T_{VL}*) des Trägermediums,
einen Temperatursensor im Rücklauf (RL) zum Ermitteln einer Rücklauftemperatur (*T_{RL}*) des Trägermediums, und
eine zentrale Regeleinrichtung (Z) zum Regeln des Wärmeerzeugers (WE) und der Pumpe (P),
wobei die Heizkörper (HK1, HK2) jeweils:
ein Stellglied (V1, V2) zum Einstellen eines Volumenstroms durch den Heizkörper (HK1, HK2) und
eine Einstelleinrichtung (E1, E2) mit
einem Temperatursensor zum Ermitteln einer Raumisttemperatur (*T_{R}*),
einem Regler zum Einstellen einer Stellgliedöffnung des Stellglieds (V1, V2) in Abhängigkeit einer jeweils vorgegebenen Raumsolltemperatur (*T_{R,W}*) und der ermittelten Raumisttemperatur (*T_{R}*), und
einer Kommunikationseinrichtung zum Kommunizieren mit der zentralen Regeleinrichtung (Z)
umfassen, wobei die zentrale Regeleinrichtung (Z) konfiguriert ist:
falls in einem Raum (R1, R2) eine Raumisttemperatur (T_{R}) kleiner als eine vorgegebene Raumsolltemperatur (*T_{R,W}*) ist, und die Differenz zwischen Raumisttemperatur (T_{R}) und vorgegebener Raumsolltemperatur (*T_{R,W}*) größer als eine vorgegebene Temperaturdifferenz (Δ*T*) ist die Heizkörper (HK1, HK2) des Raumes (R1, R2) im Aufheizbetrieb zu betreiben;
falls Heizkörper (HK1, HK2) in mehr als einem Raum (R1, R2) im Aufheizbetrieb betrieben werden, einen Aufheizwert (*Ṫ_{R}*) in Abhängigkeit einer Raumtemperaturänderung (*dT_{R}*) innerhalb eines festgelegten Zeitraums (*dt*) für jeden Raum (R1, R2) mit Heizkörpern (HK1, HK2) im Aufheizbetrieb zu ermitteln;
für jeden Heizkörper (HK1, HK2) im Aufheizbetrieb: einen oberen Grenzwert (*Hₘₐₓ*) der Stellgliedöffnung in Abhängigkeit des jeweils ermittelten Aufheizwerts (*Ṫ_{R}*) und eines Mittelwerts (〈Ṫ_{R}〉) aller ermittelten Aufheizwerte (*Ṫ_{R}*) vorzugeben;
eine Temperaturspreizung (Δ*T_{S}*) in Abhängigkeit der ermittelten Vorlauftemperatur (*T_{VL}*) und der ermittelten Rücklauftemperatur (*T_{RL}*) zu ermitteln,
die Pumpe (P) in Abhängigkeit der ermittelten Temperaturspreizung (*ΔT_{S}*) und eines vorgegebenen Sollwerts der Temperaturspreizung (Δ*T_{S,W}*) zu betreiben; und
die Heizkörper (HK1, HK2) in Abhängigkeit der vorgegebenen oberen Grenzwerte (*Hₘₐₓ*) zu betreiben.

7. Heizungsanlage (1) nach Anspruch 6, wobei die zentrale Regeleinrichtung (Z) ferner konfiguriert ist:
alle vorgegebenen oberen Grenzwerte (*Hₘₐₓ*) der Stellgliedöffnungen zu erfassen;
den Heizköpern (HK1, HK2) mit dem größten vorgegebenen oberen Grenzwert der Stellgliedöffnung einen neuen oberen Grenzwert (*H_{max,neu}*) der Stellgliedöffnung vorzugeben und
allen übrigen Heizköpern (HK1, HK2) neue obere Grenzwerte der Stellgliedöffnungen in Abhängigkeit einer Differenz zwischen dem größten vorgegebenen oberen Grenzwert und dem neuen oberen Grenzwert vorzugeben.

8. Heizungsanlage (1) nach Anspruch 6, wobei die zentrale Regeleinrichtung (Z) ferner konfiguriert ist:
die aktuell eingestellten Stellgliedöffnungen (*Hₐₖₜ*) aller Heizkörper (HK1, HK2) zu erfassen;
eine Vorlaufsolltemperatur (*T_{VL,W}*) in Anhängigkeit einer Differenz zwischen der maximalen aktuell eingestellten Stellgliedöffnung (*H_{akt,max}*) und einem vorgegebenen Sollwert (*Hₛₒₗₗ*) für die maximale Stellgliedöffnung zu ermitteln und
den Wärmeerzeuger (WE) in Abhängigkeit der ermittelten Vorlaufsolltemperatur (*T_{VL,W}*) zu betreiben.

## Claims

1. A method for operating a heating installation (1) in a building having at least two rooms (R1, R2), said heating installation (1) comprising:
at least one heating body (HK1, HK2) for each room (R1, R2);
a heat generator (WE) for heating a carrier medium flowing via an supply pipe (VL) to the heating bodies (HK1, HK2) and via a return pipe (RL) back to said heat generator (WE),
a pump (P) arranged in said supply pipe (VL) or in said return pipe (RL) for delivering said carrier medium,
a temperature sensor in said supply pipe (VL) for determining an supply pipe temperature (*T_{VL}*) of said carrier medium,
a temperature sensor in said return pipe (RL) for determining a return pipe temperature (*T_{RL}*) of said carrier medium, and
a central control device (Z) for controlling said heat generator (WE) and said pump (P),
wherein the heating bodies (HK1, HK2) each comprise:
a regulating member (V1, V2) for setting a volumetric flow through the heating body (HK1, HK2), and
a setting device (E1, E2) including
a temperature sensor for determining an actual room temperature (*T_{R}*),
a controller for setting a regulating member opening of said regulating member (V1, V2) depending on a respectively specified target room temperature (*T_{R,W}*) and on the determined actual room temperature (*T_{R}*), and
a communication device for communicating with said central control device (Z),
said method comprising the steps of:
if, in one room (R1, R2), an actual room temperature (*T_{R}*) is below a specified target room temperature (*T_{R,W}*) and the difference between the actual room temperature (*T_{R}*) and the specified target room temperature (*T_{R,W}*) is greater than a specified temperature difference (Δ*T*)*,* operating the heating bodies (HK1, HK2) of the room (R1, R2) in heating operation;
if heating bodies (HK1, HK2) are operated during heating operation in more than one room (R1, R2), determining a heating value (*Ṫ_{R}*) depending on a room temperature change (*dT_{R}*) within a specified time period (*dt*) for each room (R1, R2) with heating bodies (HK1, HK2) during heating operation;
for each heating body (HK1, HK2) during heating operation: specifying an upper limit value (*Hₘₐₓ*) of the regulating member opening depending on the heating value (*Ṫ_{R}*) determined in each case and an average value (〈*Ṫ_{R}*〉)) of all determined heating values (*Ṫ_{R}*);
operating said heating bodies (HK1, HK2) depending on the specified upper limit value (*Hₘₐₓ*);
determining a temperature spread (Δ*T_{S}*) depending on the determined supply pipe temperature (*T_{VL}*) and the determined return pipe temperature (*T_{RL}*); and
operating said pump (P) depending on the determined temperature spread (Δ*T_{S}*) and a specified target value for the temperature spread (Δ*T_{S,W}*))*.*

2. The method according to claim 1, said method further comprising:
acquiring all specified upper limit values (*Hₘₐₓ*) of the regulating member openings;
for heating bodies (HK1, HK2) with the largest specified upper limit value of the regulating member opening: specifying a new upper limit value (*H_{max,neu}*) for the regulating member opening; and
for all remaining heating elements (HK1, HK2): specifying new upper limit values for the regulating member opening depending on a difference between the largest specified upper limit value and the new upper limit value.

3. The method according to claim 1, said method further comprising:
acquiring the currently set regulating member openings (*Hₐₖₜ*) of all heating bodies (HK1, HK2);
determining a supply pipe target temperature (*T_{VL,W}*) depending on a difference between the maximum currently set regulating member opening (*H_{akt,max}*) and a specified target value (*Hₛₒₗₗ*) for the maximum regulating member opening; and
operating said heat generator (WE) depending on the determined supply pipe target temperature (*T_{VL,W}*).

4. The method according to claim 3, wherein:
the supply pipe target temperature (*T_{VL,W}*) is reduced if the maximum currently set regulating member opening (*H_{akt,max}*) is smaller than the specified target value (*Hₛₒₗₗ*) for the maximum regulating member opening, or
the supply pipe target temperature (*T_{VL,W}*) is increased if the maximum currently set regulating member opening (*H_{akt,max}*) is greater than the specified target value (*Hₛₒₗₗ*) for the maximum regulating member opening.

5. The method according to claim 1, wherein the target value of the temperature spread (Δ*T_{S}*) is specified depending on a characteristic condensation temperature of said heat generator (WE).

6. A heating installation (1) in a building having at least two rooms (R1, R2), said heating installation (1) comprising:
at least one heating body (HK1, HK2) for each room (R1, R2);
a heat generator (WE) for heating a carrier medium flowing via an supply pipe (VL) to the heating bodies (HK1, HK2) and via a return pipe (RL) back to said heat generator (WE),
a pump (P) arranged in said supply pipe (VL) or in said return pipe (RL) for delivering said carrier medium,
a temperature sensor in said supply pipe (VL) for determining an supply pipe temperature (*T_{VL}*) of said carrier medium,
a temperature sensor in said return pipe (RL) for determining a return pipe temperature (*T_{RL}*) of said carrier medium, and
a central control device (Z) for controlling said heat generator (WE) and said pump (P),
wherein the heating bodies (HK1, HK2) each comprise:
a regulating member (V1, V2) for setting a volumetric flow through the heating body (HK1, HK2), and
a setting device (E1, E2) including
a temperature sensor for determining an actual room temperature (*T_{R}*),
a controller for setting a regulating member opening of said regulating member (V1, V2) depending on a respectively specified target room temperature (*T_{R,W}*) and on the determined actual room temperature (*T_{R}*), and
a communication device for communicating with said central control device (Z),
said central control device (Z) being configured to:
if, in one room (R1, R2), an actual room temperature (*T_{R}*) is below a specified target room temperature (*T_{R,W}*) and the difference between the actual room temperature (*T_{R}*) and the specified target room temperature (*T_{R,W}*) is greater than a specified temperature difference (*ΔT*)*,* operate the heating bodies (HK1, HK2) of the room (R1, R2) in heating operation;
if heating bodies (HK1, HK2) are operated during heating operation in more than one room (R1, R2), determine a heating value (*Ṫ_{R}*) depending on a room temperature change (*dT_{R}*) within a specified time period (*dt*) for each room (R1, R2) with heating bodies (HK1, HK2) during heating operation;
for each heating body (HK1, HK2) during heating operation: specify an upper limit value (*Hₘₐₓ*) of said regulating member opening depending on the heating value (*Ṫ_{R}*) determined in each case and an average value (〈*Ṫ_{R}*〉)) of all determined heating values (*Ṫ_{R}*);
determine a temperature spread (Δ*T_{S}*) depending on the determined supply pipe temperature (*T_{VL}*) and the determined return pipe temperature (*T_{RL}*);
operate said pump (P) depending on the determined temperature spread (Δ*T_{S}*) and a specified target value for the temperature spread (*ΔT_{S,W}*))*;* and
operate the heating bodies (HK1, HK2) depending on the specified upper limit value (*Hₘₐₓ*).

7. The heating installation (1) according to claim 6, said central control device (Z) being further configured to:
acquire all specified upper limit values (*Hₘₐₓ*) of the regulating member openings;
specify a new upper limit value (*H*_{*max*,*neu*}) of the regulating member opening for heating bodies (HK1, HK2) with the largest specified upper limit value of the regulating member opening; and
specify new upper limit values for the regulating member opening depending on a difference between the largest specified upper limit value and the new upper limit value for all remaining heating elements (HK1, HK2).

8. The heating installation (1) according to claim 6, said central control device (Z) being further configured to:
acquire the currently set regulating member openings (*Hₐₖₜ*) of all heating bodies (HK1, HK2);
determine a supply pipe target temperature (*T_{VL,W}*) depending on a difference between the maximum currently set regulating member opening (*H_{akt,max}*) and a specified target value (*Hₛₒₗₗ*) for the maximum regulating member opening; and
operate said heat generator (WE) depending on the determined supply pipe target temperature (*T_{VL,W}*)*.*

## Revendications

1. Procédé destiné à exploiter une installation de chauffage (1) dans un bâtiment avec au moins deux pièces (R1, R2), dans lequel l'installation de chauffage (1) comprend :
au moins un corps de chauffe (HK1, HK2) par pièce (R1, R2) ;
un générateur de chaleur (WE) pour chauffer un milieu porteur qui s'écoule vers les corps de chauffe (HK1, HK2) via un avancement (VL) et de nouveau vers le générateur de chaleur (WE) via un retour (RL),
une pompe (P) agencée dans l'avancement (VL) ou dans le retour (RL) pour acheminer le milieu porteur,
un capteur de température dans l'avancement (VL) pour déterminer une température d'avancement (*T_{VL}*) du milieu porteur,
un capteur de température dans le retour (RL) pour déterminer une température de retour (*T_{RL}*) du milieu porteur, et
un dispositif de régulation (Z) central pour réguler le générateur de chaleur (WE) et la pompe (P),
dans lequel les corps de chauffe (HK1, HK2) comprennent respectivement :
un organe de réglage (V1, V2) pour régler un débit volumétrique via les corps de chauffe (HK1, HK2) et
un dispositif de réglage (E1, E2) avec
un capteur de température pour déterminer une température réelle de pièce (*T_{R}*),
un régulateur pour régler une ouverture d'organe de réglage de l'organe de réglage (V1, V2) en fonction d'une température de consigne de pièce (*T_{R,W}*) respectivement prédéfinie et de la température réelle de pièce *(TR)* déterminée, et
un dispositif de communication pour communiquer avec le dispositif de régulation (Z) central,
dans lequel le procédé comprend les étapes suivantes consistant à :
dans le cas où dans une pièce (R1, R2) une température réelle de pièce (*T_{R}*) est inférieure à une température de consigne de pièce (*T_{R,W}*) prédéfinie, et la différence entre la température réelle de pièce (*T_{R}*) et la température de consigne de pièce (*T_{R,W}*) prédéfinie est supérieure à une différence de température (*ΔT*) prédéfinie, exploiter en exploitation de réchauffement le corps de chauffe (HK1, HK2) de la pièce (R1, R2) ;
dans le cas où les corps de chauffe (HK1, HK2) sont exploités en exploitation de réchauffement dans plus d'une pièce (R1, R2), déterminer une valeur de réchauffement (*T_{R}*) en fonction d'une modification de température de pièce (*dT_{R}*) à l'intérieur d'une période (*dt*) préétablie pour chaque pièce (R1, R2) avec les corps de chauffe (HK1, HK2) en exploitation de réchauffement ;
pour chaque corps de chauffe (HK1, HK2) en exploitation de réchauffement : prédéfinir une valeur limite supérieure (*Hₘₐₓ*) de l'ouverture d'organe de réglage en fonction de la valeur de réchauffement (*T_{R}*) respectivement déterminée et d'une valeur moyenne (<*T_{R}*>) de toutes les valeurs de réchauffement (*T_{R}*) déterminées ;
exploiter les corps de chauffe (HK1, HK2) en fonction de la valeur limite supérieure (*Hₘₐₓ*) prédéfinie ;
déterminer un étalement de température (Δ*T_{S}*) en fonction de la température d'avancement (*T_{VL}*) déterminée et de la température de retour (*T_{RL}*) déterminée ; et
exploiter la pompe (P) en fonction de l'étalement de température (Δ*T_{S}*) déterminé et d'une valeur de consigne prédéfinie de l'étalement de température (Δ*T_{S,W}*)*.*

2. Procédé selon la revendication 1, dans lequel le procédé comprend en outre le fait de :
saisir toutes les valeurs limites supérieures (*Hₘₐₓ*) prédéfinies des ouvertures d'organe de réglage ;
pour les corps de chauffe (HK1, HK2) avec la plus grande valeur limite supérieure prédéfinie de l'ouverture d'organe de réglage : prédéfinir une nouvelle valeur limite supérieure (*H_{max,neu}*) de l'ouverture d'organe de réglage et
pour tous les corps de chauffe (HK1, HK2) restants: prédéfinir de nouvelles valeurs limites supérieures de l'ouverture d'organe de réglage en fonction d'une différence entre la plus grande valeur limite supérieure prédéfinie et la nouvelle valeur limite supérieure.

3. Procédé selon la revendication 1, dans lequel le procédé comprend en outre le fait de :
saisir les ouvertures d'organe de réglage actuellement réglées (*Hₐₖₜ*) de tous les corps de chauffe (HK1, HK2) ;
déterminer une température de consigne d'avancement (*T_{VL,W}*) en fonction d'une différence entre l'ouverture d'organe de réglage actuellement réglée maximale (*H_{akt,max}*) et une valeur de consigne (*Hₛₒₗₗ*) prédéfinie pour l'ouverture d'organe de réglage maximale et
exploiter le générateur de chaleur (WE) en fonction de la température de consigne d'avancement (*T_{VL,W}*) déterminée.

4. Procédé selon la revendication 3, dans lequel :
la température de consigne d'avancement (*T_{VL,W}*) est abaissée dans le cas où l'ouverture d'organe de réglage actuellement réglée maximale (*H_{akt,max}*) est inférieure à la valeur de consigne (*Hₛₒₗₗ*) prédéfinie pour l'ouverture d'organe de réglage maximale ou
la température de consigne d'avancement (*T_{VL,W}*) est augmentée dans le cas où l'ouverture d'organe de réglage actuellement réglée maximale (*H_{akt,max}*) est supérieure à la valeur de consigne (*Hₛₒₗₗ*) prédéfinie pour l'ouverture d'organe de réglage maximale.

5. Procédé selon la revendication 1, dans lequel la valeur de consigne de l'étalement de température (Δ*T_{S,W}*) est prédéfinie en fonction d'une température de condensation caractéristique du générateur de chaleur (WE).

6. Installation de chauffage (1) dans un bâtiment avec au moins deux pièces (R1, R2), dans laquelle l'installation de chauffage (1) comprend :
au moins un corps de chauffe (HK1, HK2) par pièce (R1, R2) ;
un générateur de chaleur (WE) pour chauffer un milieu porteur qui s'écoule vers les corps de chauffe (HK1, HK2) via un avancement (VL) et de nouveau vers le générateur de chaleur (WE) via un retour (RL),
une pompe (P) agencée dans l'avancement (VL) ou dans le retour (RL) pour acheminer le milieu porteur,
un capteur de température dans l'avancement (VL) pour déterminer une température d'avancement (*T_{VL}*) du milieu porteur,
un capteur de température dans le retour (RL) pour déterminer une température de retour (*T_{RL}*) du milieu porteur, et
un dispositif de régulation (Z) central pour réguler le générateur de chaleur (WE) et la pompe (P),
dans laquelle les corps de chauffe (HK1, HK2) comprennent respectivement :
un organe de réglage (V1, V2) pour régler un débit volumétrique via les corps de chauffe (HK1, HK2) et
un dispositif de réglage (E1, E2) avec
un capteur de température pour déterminer une température réelle de pièce (*T_{R}*),
un régulateur pour régler une ouverture d'organe de réglage de l'organe de réglage (V1, V2) en fonction d'une température de consigne de pièce (*T_{R,W}*) respectivement prédéfinie et de la température réelle de pièce *(TR)* déterminée, et
un dispositif de communication pour communiquer avec le dispositif de régulation (Z) central,
dans laquelle le dispositif de régulation (Z) central est configuré pour :
dans le cas où dans une pièce (R1, R2) une température réelle de pièce (*T_{R}*) est inférieure à une température de consigne de pièce (*T_{R,W}*) prédéfinie, et la différence entre la température réelle de pièce (*T_{R}*) et la température de consigne de pièce (*T_{R,W}*) prédéfinie est supérieure à une différence de température (*ΔT*) prédéfinie, exploiter en exploitation de réchauffement le corps de chauffe (HK1, HK2) de la pièce (R1, R2) ;
dans le cas où les corps de chauffe (HK1, HK2) sont exploités en exploitation de réchauffement dans plus d'une pièce (R1, R2), déterminer une valeur de réchauffement (*T_{R}*) en fonction d'une modification de température de pièce (*dT_{R}*) à l'intérieur d'une période (*dt*) préétablie pour chaque pièce (R1, R2) avec les corps de chauffe (HK1, HK2) en exploitation de réchauffement ;
pour chaque corps de chauffe (HK1, HK2) en exploitation de réchauffement : prédéfinir une valeur limite supérieure (*Hₘₐₓ*) de l'ouverture d'organe de réglage en fonction de la valeur de réchauffement (*T_{R}*) respectivement déterminée et d'une valeur moyenne (<*T_{R}*>) de toutes les valeurs de réchauffement (*T_{R}*) déterminées ;
déterminer un étalement de température (Δ*T_{S}*) en fonction de la température d'avancement (*T_{VL}*) déterminée et de la température de retour (*T_{RL}*) déterminée ;
exploiter la pompe (P) en fonction de l'étalement de température (Δ*T_{S}*) déterminé et d'un valeur de consigne prédéfinie de l'étalement de température (*ΔT_{S,W}*)*,* et
exploiter les corps de chauffe (HK1, HK2) en fonction de la valeur limite supérieure (*Hₘₐₓ*) prédéfinie.

7. Installation de chauffage (1) selon la revendication 6, dans lequel le dispositif de régulation (Z) central est en outre configuré pour :
saisir toutes les valeurs limites supérieures (*Hₘₐₓ*) prédéfinies des ouvertures d'organe de réglage ;
pour les corps de chauffe (HK1, HK2) avec la plus grande valeur limite supérieure prédéfinie de l'ouverture d'organe de réglage, prédéfinir une nouvelle valeur limite supérieure (*H_{max,neu}*) de l'ouverture d'organe de réglage et
pour tous les corps de chauffe (HK1, HK2) restants, prédéfinir de nouvelles valeurs limites supérieures des ouvertures d'organe de réglage en fonction d'une différence entre la plus grande valeur limite supérieure prédéfinie et la nouvelle valeur limite supérieure.

8. Installation de chauffage (1) selon la revendication 6, dans lequel le dispositif de régulation (Z) central est en outre configuré pour :
saisir les ouvertures d'organe de réglage actuellement réglées (*Hₐₖₜ*) de tous les corps de chauffe (HK1, HK2) ;
déterminer une température de consigne d'avancement (*T_{VL,W}*) en fonction d'une différence entre l'ouverture d'organe de réglage actuellement réglée maximale (*H_{akt,max}*) et une valeur de consigne (*Hₛₒₗₗ*) prédéfinie pour l'ouverture d'organe de réglage maximale et
exploiter le générateur de chaleur (WE) en fonction de la température de consigne d'avancement (*T_{VL,W}*) déterminée.
